(19) Europäisches Patentamt
European Patent Office
Office européen des brevets

(11) EP 1 334 133 B1

(12) EUROPÄISCHE PATENTSCHRIFT

(45) Veröffentlichungstag und Bekanntmachung des Hinweises auf die Patenterteilung:
**03.05.2006 Patentblatt 2006/18**

(21) Anmeldenummer: **01993626.9**

(22) Anmeldetag: **23.10.2001**

(51) Int Cl.:
***C08F 4/00*** (2006.01)

(86) Internationale Anmeldenummer:
**PCT/EP2001/012226**

(87) Internationale Veröffentlichungsnummer:
**WO 2002/038618 (16.05.2002 Gazette 2002/20)**

# (54) VERFAHREN ZUR KONTINUIERLICHEN HERSTELLUNG VON POLYMERZUSAMMENSETZUNGEN SOWIE VERWENDUNG

METHOD FOR THE CONTINUOUS PRODUCTION OF POLYMER COMPOSITIONS AND THE USE THEREOF

PROCEDE DE PRODUCTION CONTINUE DE COMPOSITIONS POLYMERES ET UTILISATION ASSOCIEE

(84) Benannte Vertragsstaaten:
**AT BE CH CY DE DK ES FI FR GB GR IE IT LI LU MC NL PT SE TR**

(30) Priorität: **13.11.2000 US 709354**

(43) Veröffentlichungstag der Anmeldung:
**13.08.2003 Patentblatt 2003/33**

(73) Patentinhaber: **RohMax Additives GmbH**
**64293 Darmstadt (DE)**

(72) Erfinder:
- **SCHERER, Markus**
  **66822 Lebach (DE)**
- **BOLLINGER, Joseph, Martin**
  **North Wales, PA 19454 (US)**
- **COOPER, David**
  **Poylestown, PA 18901 (US)**
- **TILLERY, Larry, Stephen**
  **Holland, PA 18966 (US)**
- **WOODRUFF, Robert**
  **Jaminson, PA 18929 (US)**

(56) Entgegenhaltungen:
**WO-A-96/30421**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 334 133 B1

**Beschreibung**

Die Erfindung betrifft Verfahren zur Herstellung von Polymerzusammensetzungen, wobei man ethylenisch ungesättigte Monomere mittels Initiatoren, die eine übertragbare Atomgruppe aufweisen, und einem oder mehrere Katalysatoren, die mindestens ein Übergangsmetall umfassen, in Gegenwart von Liganden, die mit dem oder den metallischen Katalysatoren eine Koordinationsverbindung bilden können, polymerisiert.

Die radikalische Polymerisation ist ein wichtiges kommerzielles Verfahren zur Herstellung einer Vielfalt von Polymeren, wie beispielsweise PMMA und Polystyrol. Nachteilig ist hierbei, daß der Aufbau der Polymere, das Molekulargewicht und die Molekulargewichtsverteilung relativ schlecht gesteuert werden können.

Eine Lösung dieser Probleme liefert das sogenannte ATRP-Verfahren (=Atom Transfer Radical Polymerisation). Es wird angenommen, daß es sich hierbei um eine "lebende" radikalische Polymerisation handelt, ohne daß durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenische Gruppen addiert. Die Übertragung der Atomgruppe auf die Übergangsmetallverbindung ist jedoch reversibel, so daß die Atomgruppe auf die wachsende Polymerkette rückübertragen wird, wodurch ein kontrolliertes Polymerisationssystem gebildet wird. Dementsprechend kann der Aufbau des Polymers, das Molekulargewicht und die Molekulargewichtsverteilung gesteuert werden.

Diese Reaktionsführung wird beispielsweise von J-S. Wang et al., J.Am.Chem.Soc., vol.117, p.5614-5615 (1995), von Matyjaszewski, Macromolecules, vol.28, p.7901 - 7910 (1995) beschrieben. Darüber hinaus offenbaren die Patentanmeldungen WO 96/30421, WO 97/47661, WO 97/18247, WO 98/20050, WO 98/40415 und WO 99/10387 Varianten der zuvor erläuterten ATRP.

Der oben beschriebene Mechanismus ist nicht unumstritten. So wird beispielsweise in WO 97/47661 beschrieben, daß die Polymerisation nicht durch einen radikalischen Mechanismus sondern durch Insertion erfolgt. Für die vorliegende Erfindung ist diese Differenzierung jedoch ohne belang, da bei der in WO 97/47661 offenbarten Reaktionsführung Verbindungen verwendet werden, die auch bei einer ATRP eingesetzt werden.

Je nach erwünschter Polymerlösung werden die Monomere, die Übergangsmetallkatalysatoren, die Liganden und die Initiatoren ausgewählt. Es wird angenommen, daß eine hohe Geschwindigkeitskonstante der Reaktion zwischen dem Übergangsmetall-Ligand-Komplex und der übertragbaren Atomgruppe ebenso wie eine geringe Konzentration freier Radikale im Gleichgewicht wesentlich für eine enge Molekulargewichtsverteilung sind. Ist die Konzentration an freien Radikalen zu hoch, treten typische Abbruchreaktionen auf, die für eine breite Molekulargewichtsverteilung verantwortlich sind. Die Austauschrate ist beispielsweise abhängig von der übertragbaren Atomgruppe, dem Übergangsmetall, den Liganden und dem Anion der Übergangsmetallverbindung. Wertvolle Hinweise zur Auswahl dieser Komponenten findet der Fachmann beispielsweise in WO 98/40415.

Die Vorteile bekannterATRP-Polymerisationsverfahren beschränken sich jedoch hauptsächlich auf Monomere, die selbst polar sind oder die in polaren Medien eine gute Löslichkeit zeigen. Zwar ist die vereinzelte Verwendung von unpolaren aprotischen Kohlenwasserstoffen wie Benzol, Toluol, Xylol, Cyclohexan und Hexan ebenfalls literaturbekannt, die mit diesen Lösungsmitteln hergestellten Polymere weisen jedoch deutlich höhere Polydispersitäten auf. Dieser Effekt wird beispielsweise in WO 98/40415 beschrieben.

Darüber hinaus offenbart dieses Dokument zwar die Möglichkeit polare Monomere, wie Methylmethacrylat oder Styrol, mittels metallischem Kupfer zu polymerisieren, allerdings ist die Molekulargewichtsverteilung wesentlich ungünstiger als bei Verwendung einer Mischung von Cu°/CuBr bzw. Cu°/$CuBr_2$.

In Pol. Preprint (ACS, Div. Pol. Chem.), 1999, 40(2), 432 beschreiben M.J.Ziegler et al. unter anderem eine schlechte Steuerbarkeit der Polymerisation von t-Butylmethacrylat, falls diese in Masse stattfindet. Bei Verwendung von ca. 20 bis 25 Gew.-% an polaren Lösungsmitteln läßt sich sowohl die Molmasse als auch die Polydispersität verbessern. Allerdings können ethylenisch ungesättigte Monomermischungen, die zu mindestens 50 Gew.-% ethylenisch ungesättigte Esterverbindungen mit Alkyl- oder Heteroalkylketten mit mindestens 8 Kohlenstoffatome enthalten, wegen der begrenzten Löslichkeit von ethylenisch ungesättigten Esterverbindungen mit Alkyl- oder Heteroalkylresten mit mindestens 8 Kohlenstoffatomen in polaren Lösungsmitteln nur schlecht mittels der bekannten ATRP-Verfahren polymerisiert werden. Darüber hinaus müssen diese großen Mengen an polaren Lösungsmitteln, je nach Verwendung, nach Herstellung der Polymere von der Zusammensetzung abgetrennt werden.

Ein weiterer Nachteil der bekannten ATRP-Verfahren ist darin zu erblicken, daß sie für Anwendungen im großtechnischen Maßstab nur bedingt geeignet sind. Zum einen können die Ansatzgrößen der Polymerisationen insbesondere aus Gründen der Wärmeregelung und der Durchmischung der Reaktionszusammensetzung nicht beliebig vergrößert werden. Weiterhin muß nach jedem Polymerisationsansatz das Reaktionsprodukt aus dem Reaktionsgefäß entfernt, das Reaktionsgefäß gegebenenfalls gereinigt und die neue Eduktzusammensetzung in das Reaktionsgefäß gegeben werden. Die durch solche ATRP-Verfahren maximal erzielbare Polymerausbeute pro Zeiteinheit ist daher vergleichsweise gering.

Von der technischen Seite werden jedoch Polymerisationsverfahren gefordert, die einfach und prinzipiell beliebig skalierbar sind und die möglichst hohe Polymerausbeuten pro Zeiteinheit liefern. Dabei sollen die Polymerisationsverfahren auf einfache Art und Weise und kostengünstig durchführbar sein. Zwischenschritte, wie Entleeren und gegebenenfalls Reinigen des Reaktionsgefäßes sind zu vermeiden.

In Anbetracht des Standes der Technik war es nun Aufgabe der vorliegenden Erfindung, ein Verfahren zur Herstellung einer Polymerzusammensetzung zur Verfügung zu stellen, welches einfach und prinzipiell beliebig skalierbar ist und welches möglichst hohe Polymerausbeuten pro Zeiteinheit liefert. Insbesondere sollte das Verfahren zur Herstellung einer Polymerzusammensetzung auf einfache Art und Weise und kostengünstig durchführbar sein und keine Zwischenschritte, wie Entleeren und Reinigen des Reaktionsgefäßes aufweisen.

Eine weitere Aufgabe der vorliegenden Erfindung war auch, ein Verfahren zur Herstellung einer Polymerzusammensetzung anzugeben, bei welchem die in der Zusammensetzung enthaltenen Polymere zu mindestens 50 Gew.-% aus (Meth)acrylaten mit Alkyl- oder Heteroalkylketten mit mindestens 8 Kohlenstoffatomen aufgebaut sind.
Der vorliegenden Erfindung lag auch die Aufgabe zugrunde, daß die in der Zusammensetzung enthaltenen Polymere eine enge Molekulargewichtsverteilung aufweisen. Vor allem soll bei der Herstellung der Polymermischung der Einsatz aufwendigerer Verfahren, wie etwa der anionischen Polymerisation, vermieden werden.

Eine weitere Aufgabe war auch darin zu erblicken, ein Verfahren zur Herstellung einer Polymerzusammensetzung zur Verfügung zu stellen, das auf einfache Art und Weise die Synthese von Copolymeren mit einem nicht statistischem Aufbau, insbesondere die Synthese von Diblock-, Triblock- und Gradientencopolymeren, ermöglicht.

Aufgabe der vorliegenden Erfindung war auch, ein Verfahren zur Polymerisation zur Verfügung zu stellen, durch das Polymere mit höheren oder hohen Molekulargewichten erhalten werden können.

Eine weitere Aufgabe bestand darin, ein kostengünstig durchführbares Verfahren anzugeben, das großtechnisch anwendbar ist. Darüber hinaus sollte das Verfahren mit kommerziell erhältlichen Komponenten leicht und einfach ausführbar sein.

Gelöst werden diese sowie weitere nicht explizit genannten Aufgaben, die jedoch aus den hierin einleitend diskutierten Zusammenhängen ohne weiteres ableitbar oder erschließbar sind, durch ein Verfahren zur Herstellung einer Polymerzusammensetzung mit allen Merkmalen des Patentanspruchs 1. Zweckmäßige Abwandlungen des erfindungsgemäßen Verfahrens werden in den auf Anspruch 1 rückbezogenen Unteransprüchen unter Schutz gestellt.

Dadurch, daß man bei einem Verfahren der eingangs genannten Art ethylenisch ungesättigte Monomere mittels einer kontinuierlichen ATRP-Prozeßführung polymerisiert, gelingt es auf nicht ohne weiteres vorhersehbare Weise ein Verfahren zur Herstellung einer Polymerzusammensetzung zur Verfügung zu stellen, welches einfach und prinzipiell beliebig skalierbar ist und welches hohe Polymerausbeuten pro Zeiteinheit liefert. Hierbei polymerisiert man die ethylenisch ungesättigte Monomere mittels Initiatoren, die eine übertragbare Atomgruppe aufweisen, und einem oder mehrere Katalysatoren, die mindestens ein Übergangsmetall umfassen, in Gegenwart von Liganden, die mit dem oder den metallischen Katalysatoren eine Koordinationsverbindung bilden können. Diese Herstellungsart ist besonders kostengünstig durchführbar und insofern eine kontinuierliche technische Produktion hervorragend geeignet.

Zugleich lassen sich durch das erfindungsgemäße Verfahren eine Reihe weiterer Vorteile erzielen. Hierzu gehören unter anderem:

⇒ Das erfindungsgemäße Verfahren erfordert keine Zwischenschritte, wie Entleeren und Reinigen des Reaktionsgefäßes.

⇒ Es ist für die Herstellung von Polymerzusammensetzungen, die zu mindestens 50 Gew.-% aus (Meth)acrylaten mit Alkyl- oder Heteroalkylketten mit mindestens 8 Kohlenstoffatomen aufgebaut sind, besonders geeignet.

⇒ Die Polymere in den durch das Verfahren hergestellten Polymerzusammensetzungen zeichnen sich durch eine enge Molekulargewichtsverteilung aus.

⇒ Das erfindungsgemäße Verfahren erlaubt eine hervorragende Kontrolle des Molekulargewichts der in den Zusammensetzungen enthaltenen Polymeren.

⇒ Hinsichtlich Druck, Temperatur und Lösungsmittel ist die Durchführung der Polymerisation relativ unproblematisch, auch bei moderaten Temperaturen werden unter bestimmten Umständen akzeptable Ergebnisse erzielt.

⇒ Mit Hilfe des erfindungsgemäßen Verfahrens lassen sich hohe Ausbeuten erzielen.

⇒ Das erfindungsgemäße Verfahren ist arm an Nebenreaktionen.

⇒ Das Verfahren ist kostengünstig durchführbar. Hierbei sollte berücksichtigt werden, daß nur sehr geringe Mengen

an Katalysator eingesetzt werden.

⇒ Des weiteren kann für den Fall, daß metallisches Kupfer als Kupferquelle eingesetzt wird, dieses problemlos aus der Reaktionsmischung entfemt werden, wobei dieser Katalysator in weiteren Reaktionen ohne Aufreinigung wiederverwendet werden kann.

⇒ Mit Hilfe des Verfahrens der vorliegenden Erfindung können Polymere mit einem vorher definierten Aufbau und gezielter Struktur hergestellt werden. Insbesondere sind durch das erfindungsgemäße Verfahren Copolymeren mit einem nicht statistischem Aufbau, insbesondere Diblock-, Triblock- und Gradientencopolymeren auf einfache Art und Weise zugänglich.

⇒ Für viele Zwecke können die so erhaltenen Polymerzusammensetzungen eingesetzt werden, ohne daß sich in Lösung befindlicher Kupferkatalysator abgetrennt werden muß.

⇒ Mit Hilfe des erfindungsgemäßen Verfahrens lassen sich Monomere mit ungesättigten Esterverbindungen copolymerisieren, die selbst als Ligand wirken können. Besonders überraschend wird hierbei eine enge Molekulargewichtsverteilung erhalten.

Gemäß der vorliegenden Erfindung werden ethylenisch ungesättigte Monomere polymerisiert. Ethylenisch ungesättigte Monomere sind dem Fachmann bestens bekannt, sie umfassen alle die organischen Verbindungen, die mindestens eine ethylenische Doppelbindung aufweisen.

Erfindungsgemäß werden ethylenisch ungesättigte Monomere bevorzugt, die 50 bis 100 Gew.-%, bevorzugt 60 bis 100 Gew.-%, bezogen auf das Gesamtgewicht der ethylenisch ungesättigten Monomere, eine oder mehrere ethylenisch ungesättigte Esterverbindungen der Formel (I)

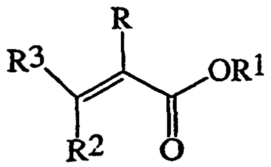

(I),

worin R Wasserstoff oder Methyl, $R^1$ einen linearen oder verzweigten Alkylrest mit 8 bis 40, vorzugsweise 10 bis 40 Kohlenstoffatomen, besonders zweckmäßig 10 bis 24 Kohlenstoffatomen, $R^2$ und $R^3$ unabhängig Wasserstoff oder eine Gruppe der Formel -COOR' bedeuten, wobei R' Wasserstoff oder einen linearen oder verzweigten Alkylrest mit 8 bis 40, vorzugsweise 10 bis 40, Kohlenstoffatomen darstellt, aufweisen. Hierbei kann der Alkylrest linear, cyclisch oder verzweigt sein.

Zu diesen Verbindungen gemäß Formel (I) gehören (Meth)acrylate, Maleate und Fumarate, die jeweils mindestens einen Alkoholrest mit 8 bis 40, vorzugsweise 10 bis 40, Kohlenstoffatomen aufweisen.

Hierbei sind (Meth)acrylate der Formel (II) bevorzugt

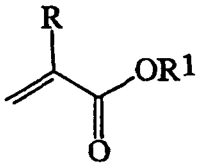

(II),

worin

R Wasserstoff oder Methyl und $R^1$ einen linearen oder verzweigten Alkylrest mit 8 bis 40, vorzugsweise 10 bis 40 Kohlenstoffatomen bedeuten.

Der Ausdruck (Meth)acrylate umfaßt Methacrylate und Acrylate sowie Mischungen aus beiden. Diese Monomere sind weithin bekannt. Zu diesen gehören unter anderem (Meth)acrylate, die sich von gesättigten Alkoholen ableiten, wie 2-Ethylhexyl(meth)acrylat, Octyl(meth)acrylat, Nonyl(meth)acrylat, isoOctyl(meth)acrylat, iso-Nonyl(meth)acrylat, 2-tert.-Butylheptyl(meth)acrylat, 3-iso-Propylheptyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth) acrylat, Heptadecyl(meth)acrylat, 5-iso-Propylheptadecyl(meth)acrylat, 4-tert -Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl (meth)acrylat, Cetyleicosyl(meth)acrylat, Stearyleicosyl(meth)acrylat, Docosyl(meth)acrylat und/oder Eicosyltetratriacontyl(meth)acrylat; (Meth)acrylate, die sich von ungesättigten Alkoholen ableiten, wie z. B. Oleyl(meth)acrylat; Cycloalkyl(meth)acrylate, wie 3-Vinyl-2-butyl-cyclohexyl(meth)acrylat und Bornyl(meth)acrylat.

Die Esterverbindungen mit langkettigem Alkoholrest lassen sich beispielsweise durch Umsetzen von (Meth) acrylaten, Fumaraten, Maleaten und/oder den entsprechenden Säuren mit langkettigen Fettalkoholen erhalten, wobei im allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911 und Oxo Alcohol® 7900, Oxo Alcohol® 1100 von Monsanto; Alphanol® 79 von ICI; Nafol® 1620, Alfol® 610 und Alfol® 810 von Condea; Epal® 610 und Epal® 810 von Ethyl Corporation; Linevol® 79, Linevol® 911 und Dobanol® 25L von Shell AG; Lial® 125 von Condea Augusta, Mailand; Dehydad® und Lorol® von Henkel KGaA sowie Linopol® 7-11 und Acropol® 91 Ugine Kuhlmann.

Neben den als Komponente a) bezeichneten ethylenisch ungesättigten Esterverbindungen, die sich von Alkoholen mit 8 bis 40 Kohlenstoffen ableiten, kann die Monomermischung auch weitere ethylenisch ungesättigte Monomere enthalten, die mit den zuvor genannten Esterverbindungen copolymerisierbar sind. Zu diesen Monomeren gehören unter anderem

b) 0 bis 40 Gew.-%, insbesondere 0,5 bis 20 Gew.-% eines oder mehrerer (Meth)acrylate der Formel (III)

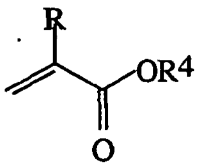

(III),

worin R Wasserstoff oder Methyl und $R^4$ einen linearen oder verzweigten Alkylrest mit 1 bis 7 Kohlenstoffatomen bedeuten,

c) 0 bis 40 Gew.-%, insbesondere 0,5 bis 20 Gew.-% eines oder mehrerer (Meth)acrylate der Formel (IV)

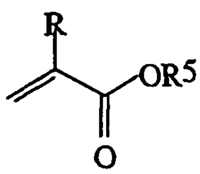

(IV),

worin R Wasserstoff oder Methyl und $R^5$ einen mit einer OH-Gruppe substituierten Alkylrest mit 2 bis 20, insbesondere 2 bis 6 Kohlenstoffatomen oder einen alkoxylierten Rest der Formel (V)

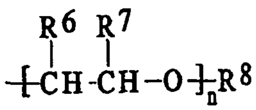

(V),

worin $R^6$ und $R^7$ unabhängig für Wasserstoff oder Methyl, $R^8$ Wasserstoff oder einen Alkylrest mit 1 bis 40 Kohlenstoffatomen und n eine ganze Zahl von 1 bis 60 steht, bedeuten,

d) 0 bis 40 Gew.-%, insbesondere 0,5 bis 20 Gew.% eines oder mehrerer (Meth)acrylate der Formel (VI)

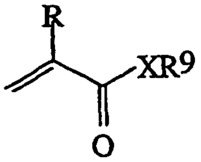

(VI),

worin R Wasserstoff oder Methyl, X Sauerstoff oder eine Aminogruppe der Formel -NH- oder $-NR^{10}-$, worin $R^{10}$ für einen Alkylrest mit 1 bis 40 Kohlenstoffatomen steht, und $R^9$ einen mit mindestens einer $-NR^{11}R^{12}$-Gruppe substituierten linearen oder verzweigten Alkylrest mit 2 bis 20, vorzugsweise 2 bis 6 Kohlenstoffatomen bedeuten, wobei $R^{11}$ und $R^{12}$ unabhängig von einander für Wasserstoff, einen Alkylrest mit 1 bis 20, vorzugsweise 1 bis 6 stehen oder worin $R^{11}$ und $R^{12}$ unter Einbeziehung des Stickstoffatoms und gegebenenfalls eines weiteren Stickstoff oder Sauerstoffatoms einen 5- oder 6-gliederigen Ring bilden, der gegebenenfalls mit $C_1$-$C_6$-Alkyl substituiert sein kann, und

e) 0 bis 40 Gew.-%, insbesondere 0,5 bis 20 Gew.-% eines oder mehrerer Comonomere, wobei sich die Angabe Gew.-% jeweils auf das Gesamtgewicht der ethylenisch ungesättigten Monomere bezieht.

Beispiele für Komponente b) sind unter anderem (Meth)acrylate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, tert-Butyl(meth)acrylat, Pentyl(meth)acrylat, Hexyl(meth)acrylat und Heptyl(meth)acrylat; Cycloalkyl(meth)acrylate, wie Cyclopentyl(meth)acrylat und Cyclohexyl(meth)acrylat; (Meth)acrylate, die sich von ungesättigten Alkoholen ableiten, wie 2-Propinyl(meth)acrylat und Allyl(meth)acrylat, Vinyl(meth)acrylat.

(Meth)acrylate gemäß Formel (IV) sind dem Fachmann bekannt. Zu diesen zählen unter anderem Hydroxylalkyl (meth)acrylate, wie 3-Hydroxypropylmethacrylat, 3,4-Dihydroxybutylmethacrylat, 2-Hydroxyethylmethacrylat, 2-Hydroxypropylmethacrylat, 2,5-Dimethyl-1,6-hexandiol(meth)acrylat, 1,10-Decandiol(meth)acrylat, 1,2-Propandiol(meth) acrylat; Polyoxyethylen- und Polyoxypropylen-Derivate der (Meth)acrylsäure, wie Triethylenglycol(meth)acrylat, Tetraethylenglycol(meth)acrylat und Tetrapropylengylcol(meth)acrylat.

Zu den (Meth)acrylaten bzw. (Meth)acrylamiden gemäß Formel (VI) (Komponente d)gehoren unter anderem Amide der (Meth)acrylsäure, wie N-(3-Dimethylaminopropyl)methacrylamid, N-(Diethylphosphono)methacrylamid, 1-Methacryloylamido-2-methyl-2-propanol, N-(3-Dibutylaminopropyl)methacrylamid, N-t-Butyl-N-(diethylphosphono)methacrylamid, N,N-bis(2-Diethylaminoethyl)methacrylamid, 4-Methacryloylamido-4-methyl-2-pentanol, N-(Methoxymethyl)methacrylamid, N-(2-Hydroxyethyl)methacrylamid, N-Acetylmethacrylamid, N-(Dimethylaminoethyl)methacrylamid, N-Methyl-N-phenylmethacrylamid, N,N-Diethylmethacrylamid, N-Methylmethacrylamid, N,N-Dimethylmethacrylamid, N-Isopropytmethacrylamid; Aminoalkylmethacrylate, wie tris(2-Methacryloxyethyl)amin, N-Methylformamidoethylmethacrylat, 2-Ureidoethylmethacrylat; heterocyclische (Meth)acrylate, wie 2-(1-Imidazolyl)ethyl(meth)acrylat, 2-(4-Morpholinyl)ethyl(meth)acrylat und 1-(2-Methacryloyloxyethyl)-2-pyrrolidon.

Die Komponente e) umfaßt insbesondere ethylenisch ungesättigte Monomere, die sich mit den ethylenisch ungesättigten Esterverbindungen der Formeln (I), (II), (III), (IV) und/oder (VI) copolymerisieren lassen.

Jedoch sind Comonomere zur Polymerisation gemäß der vorliegenden Erfindung besonders geeignet, die der Formel entsprechen:

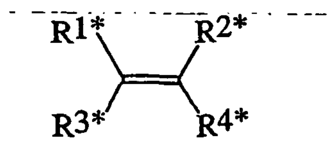

worin $R^{1*}$ und $R^{2*}$ unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+1) Halogenatomen substituiert sein können, wobei n die Zahl der Kohlenstoffatome der Alkylgruppe ist (beispielsweise $CF_3$), $\alpha$, $\beta$- ungesättigte lineare oder verzweigte Alkenyl- oder Alkynylgruppen mit 2 bis 10, vorzugsweise von 2 bis 6 und besonders bevorzugt von 2 bis 4 Kohlenstoffatomen, welche mit 1 bis (2n-1) Halogenatomen, vorzugsweise Chlor, substituiert sein können, wobei n die Zahl der Kohlenstoffatome der Alkylgruppe, beispielsweise $CH_2=CCl-$, ist, Cycloalkylgruppen mit 3 bis 8 Kohlenstoffatomen, welche mit 1 bis (2n-1) Halogenatomen, vorzugsweise Chlor, substituiert sein können, wobei n die Zahl der Kohlenstoffatome der Cycloalkylgruppe ist; $C(=Y^*)R^{5*}$, $C(=Y^*)NR^{6*}R^{7*}$,

$Y^*C(=Y^*)R^{5*}$, $SOR^{5*}$, $SO_2R^{5*}$, $OSO_2R^{5*}$, $NR^{8*}SO_2R^{5*}$, $PR^{5*}_2$, $P(=Y^*)R^{5*}_2$, $Y^*PR^{5*}_2$, $Y^*P(=Y^*)R^{5*}_2$, $NR^{8*}_2$ welche mit einer zusätzlichen $R^{8*}$-, Aryl- oder Heterocyclyl-Gruppe quaternärisiert sein kann, wobei Y* $NR^{8*}$, S oder O, vorzugsweise O sein kann; $R^{5*}$ eine Alkylgruppe mit 1 bis 20 Kohlenstoffatomen, eine Alkylthio mit 1 bis 20 Kohlenstoffatomen, $OR^{15}$ ($R^{15}$ ist Wasserstoff oder ein Alkalimetall), Alkoxy von 1 bis 20 Kohlenstoffatomen, Aryloxy oder Heterocyklyloxy ist; $R^{6*}$ und $R^{7*}$ unabhängig Wasserstoff oder eine Alkylgruppe mit 1 bis 20 Kohlenstoffatomen sind, oder $R^{6*}$ und $R^{7*}$ können zusammen eine Alkylengruppe mit 2 bis 7 vorzugsweise 2 bis 5 Kohlenstoffatomen bilden, wobei sie einen 3 bis 8-gliedrigen, vorzugsweise 3 bis 6-gliedrigen Ring bilden, und $R^{8*}$ Wasserstoff, lineare oder verzweigte Alkyl- oder Arylgruppen mit 1 bis 20 Kohlenstoffatomen sind;

$R^{3*}$ und $R^{4*}$ unabhängig ausgewählt aus der Gruppe bestehend aus Wasserstoff, Halogen (vorzugsweise Fluor oder Chlor), Alkylgruppen mit 1 bis 6 Kohlenstoffatomen und $COOR^{9*}$, worin $R^{9*}$ Wasserstoff, ein Alkalimetall oder eine Alkylgruppe mit 1 bis 40 Kohlenstoffatomen ist, sind,

oder $R^{1*}$ und $R^{3*}$ können zusammen eine Gruppe der Formel $(CH_2)_{n'}$ bilden, welche mit 1 bis 2n' Halogenatomen oder $C_1$ bis $C_4$ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und

wobei zumindest 2 der Reste $R^{1*}$, $R^{2*}$, $R^{3*}$ und $R^{4*}$ Wasserstoff oder Halogen sind.

Die Komponente e) umfaßt insbesondere ethylenisch ungesättigte Monomere, die sich mit den Esterverbindungen der Formel (I) copolymerisieren lassen. Hierzu gehören unter anderem Nitrile der (Meth)acrylsäure und andere stickstoffhaltige Methacrylate, wie Methacryloylamidoacetonitril, 2-Methacryloyloxyethylmethylcyanamid, Cyanomethylmethacrylat; Aryl(meth)acrylate, wie Benzylmethacrylat oder Phenylmethacrylat, wobei die Arylreste jeweils unsubstituiert oder bis zu vierfach substituiert sein können; carbonylhaltige Methacrylate, wie 2-Carboxyethylmethacrylat, Carboxymethylmethacrylat, Oxazolidinylethylmethacrylat, N-(Methacryloyloxy)formamid, Acetonylmethacrylat, N-Methacryloylmorpholin, N-Methacryloyl-2-pyrrolidinon; Glycoldimethacrylate, wie 1,4-Butandiolmethacrylat, 2-Butoxyethylmethacrylat, 2-Ethoxyethoxymethylmethacrylat, 2-Ethoxyethylmethacrylat, Methacrylate von Etheralkoholen, wie Tetrahydrofurfurylmethacrylat, Vinyloxyethoxyethylmethacrylat, Methoxyethoxyethylmethacrylat, 1-Butoxypropylmethacrylat, 1-Methyl-(2-vinyloxy)ethylmethacrylat, Cyclohexyloxymethylmethacrylat, Methoxymethoxyethylmethacrylat, Benzyloxymethylmethacrylat, Furfurylmethacrylat, 2-Butoxyethylmethacrylat, 2-Ethoxyethoxymethylmethacrylat, 2-Ethoxyethylmethacrylat, Allyloxymethylmethacrylat, 1-Ethoxybutylmethacrylat, Methoxymethylmethacrylat, 1-Ethoxyethylmethacrylat, Ethoxymethylmethacrylat; Methacrylate von halogenierten Alkoholen, wie 2,3-Dibromopropylmethacrylat, 4-Bromophenylmethacrylat, 1,3-Dichloro-2-propylmethacrylat, 2-Bromoethylmethacrylat, 2-Iodoethylmethacrylat, Chloromethylmethacrylat; Oxiranylmethacrylate, wie 2,3-Epoxybutylmethacrylat, 3,4-Epoxybutylmethacrylat, Glycidylmethacrylat; Phosphor-, Bor- und/oder Silicium-haltige Methacrylate, wie 2-(Dimethylphosphato)propylmethacrylat, 2-(Ethylenphosphito)propylmethacrylat, Dimethylphosphinomethylmethacrylat, Dimethylphosphonoethylmethacrylat, Diethylmethacryloylphosphonat, Dipropylmethacryloylphosphat; schwefelhaltige Methacrylate, wie Ethylsulfinylethylmethacrylat, 4-Thiocyanatobutylmethacrylat, Ethylsulfonylethylmethacrylat, Thiocyanatomethylmethacrylat, Methylsulfinylmethylmethacrylat, Bis(methacryloyloxyethyl)sulfid; Trimethacrylate, wie Trimethyloylpropantrimethacrylat;

Vinylhalogenide, wie beispielsweise Vinylchlorid, Vinylfluorid, Vinylidenchlorid und Vinylidenfluorid;

Vinylester, wie Vinylacetat;

Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;

Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazofe und hydrierte Vinylthiazole, Vinyloxazole und hydrierte Vinyloxazole;

Vinyl- und Isoprenylether;

Maleinsäure und Maleinsäurederivate, wie beispielsweise Mono- und Diester der Maleinsäure, wobei die Alkoholreste 1 bis 9 Kohlenstoffatome aufweisen, Maleinsäureanhydrid, Methylmaleinsäureanhydrid, Maleinimid, Methylmaleinimid;

Fumarsäure und Fumarsäurederivate, wie beispielsweise Mono- und Diester der Fumarsäure, wobei die Alkoholreste 1 bis 9 Kohlenstoffatome aufweisen;

Diene wie beispielsweise Divinylbenzol.

Neben Styrol sind als Comonomere insbesondere Monomere bevorzugt, die dispergierende Wirkungen haben, wie beispielsweise die zuvor genannten heterocyclischen Vinylverbindungen. Diese Monomere werden des weiteren als dispergierende Monomere bezeichnet.

Die zuvor genannten ethylenisch ungesättigten Monomere können einzeln oder als Mischungen eingesetzt werden. Es ist des weiteren möglich, die Monomerzusammensetzung während der Polymerisation zu variieren, um definierte Strukturen, wie beispielsweise Blockcopolymere, zu erhalten.

In bevorzugten Ausführungsformen des erfindungsgemäßen Verfahrens sind mindestens 70 Gewichtsprozent

der ethylenisch ungesättigten Monomere, besonders bevorzugt mehr als 80 Gew.-% der ethylenisch ungesättigten Monomere, bezogen auf da Gesamtgewicht der ethylenisch ungesättigten Monomere, (Meth)acrylate, Maleate und/oder Fumarate mit Alkyl- oder Heteroalkylketten, die mindestens 6 Kohlenstoffatome enthalten.

Gemäß der vorliegenden Erfindung erfolgt die Polymerisation mittels kontinuierlicher Prozeßführung. Polymerisationsverfahren mit kontinuierlicher Prozeßführung sind dem Fachmann bekannt und werden häufig als "kontinuierliche Polymerisationsverfahren" bezeichnet. Erfindungsgemäß bezeichnet ein Polymerisationsverfahren mit kontinuierlicher Prozeßführung ein Polymerisationsverfahren, bei dem man in einem offenen System eine Ausgangsmischung dem Reaktor kontinuierlich zugibt und gleichzeitig eine bestimmte Menge umgesetzte Produktmischung mit Polymeren dem System entnimmt.

Im Rahmen der vorliegenden Erfindung ist es bevorzugt, daß die dem offenen System zugegebene Menge an Ausgangsmischung pro Zeiteinheit der entnommenen Menge an Produktmischung pro Zeiteinheit entspricht, so daß die Reaktionsmenge über die Zeit konstant bleibt. Jedoch ist es auch denkbar, daß die zugegebene Menge an Ausgangsmischung pro Zeiteinheit größer oder kleiner als die entnommene Menge an Produktmischung pro Zeiteinheit ist.

Im Rahmen der vorliegenden Erfindung kann durch das Verhältnis von Volumen der Reaktionsmischung und der Entnahmerate, i. e. die entnommene Menge an Produktmischung pro Zeiteinheit, die mittlere Verweildauer der Reaktionsmischung im Reaktionsgefäß gesteuert werden. Die entsprechenden Beziehungen zwischen dem Volumen der Reaktionsmischung, der Entnahmerate und der mittleren Verweildauer sind dem Fachmann bekannt. Beispielsweise gilt für den Fall eines zeitlich konstanten Volumens der Reaktionsmischung $V_R$ und einer zeitlich konstanten Entnahmerate $\Delta V_E/\Delta t_E$

$$\overline{t_{Verweil}} = \frac{V_R}{\Delta V_E / \Delta t_E}$$

$\overline{t_{Verweil}}$ : mittlere Verweildauer der Reaktionsmischung im Reaktionsgefäß

Das erfindungsgemäße Verfahren kann prinzipiell in solche Reaktoren durchgeführt werden, die eine gleichzeitige Zugabe einer Ausgangsmischung und eine Entnahme der Produktmischung ermöglichen. Geeignete Reaktoren sind dem Fachmann bekannt. Zu ihnen gehören beispielsweise Strömungsröhre, Kaskaden aus Rührkesseln sowie kontinuierliche Rührkesselreaktoren. Im Gegensatz dazu sind die einfachen Rührkessel (batch reactors, stirred tank reactors) zu sehen, die zwar eine Zugabe der Ausgangsmischung jedoch keine gleichzeitige Entnahme der Produktmischung erlauben.

Die erfindungsgemäß einsetzbaren Strömungsreaktoren umfassen unter anderem die sogenannten continuous plug flow reactors CPFR, wie beispielsweise den kontinuierlichen Rohr-Reaktor, gegebenenfalls mit Nachdosierungsvorrichtungen, den 2-Komponenten-Mischer mit Band-Reaktor, den Extruder-Reaktor und den Turm-Reaktor, und die continuous linear flow reactors.

Im Rahmen der vorliegenden Erfindung bestehen Kaskaden aus hintereinander geschalteten Reaktoren. Sie umfassen beispielsweise Turmkaskaden, Rührkesselkaskaden und Rührkessel mit nachgeschaltetem Turm-Reaktor.

Kontinuierliche Rührkessel weisen im Gegensatz zum "Batch-Reaktor" einen Zu- und einen Ablauf auf, welche die gleichzeitige Zugabe der Ausgangsmischung und Entnahme der Produktmischung ermöglichen. Für weitere Informationen über die erfindungsmäß einsetzbaren Reaktortypen wird auf die Offenbarung der Fachliteratur, insbesondere auf Hans-Georg Elias "Makromoleküle", Band 2 "Technologie: Rohstoffe - industrielle Synthesen - Polymere - Anwendungen" 5. Auflage; Basel, Heidelberg, New York; Hüthig und Wepf; 1992; S. 109 und auf H. Gerrens "Über die Auswahl von Polymerisationsreaktoren" Chem.-Ing. Techn. **52** (1980) 477 ausdrücklich bezug genommen.

In einer besonders bevorzugten Ausführungsform der vorliegenden Erfindung ist der Reaktor ein Strömungsrohr.

Zur Durchführung der Polymerisation werden Katalysatoren eingesetzt, die mindestens ein Übergangsmetall umfassen. Hierbei kann jede Übergangsmetallverbindung eingesetzt werden, die mit dem Initiator, bzw. der Polymerkette, die eine übertragbare Atomgruppe aufweist, einen Redox-Zyklus bilden kann. Bei diesen Zyklen bilden die übertragbare Atomgruppe und der Katalysator reversibel eine Verbindung, wobei die Oxidationsstufe des Übergangsmetalls erhöht bzw. emiedrigt wird. Man geht davon aus, daß hierbei Radikale freigesetzt bzw. eingefangen werden, so daß die Radikalkonzentration sehr gering bleibt. Es ist allerdings auch möglich, daß durch die Addition der Übergangsmetallverbindung an die übertragbare Atomgruppe die Insertion von ethylenisch ungesättigten Monomeren in die Bindung Y-X bzw. $Y(M)_z$-X ermöglicht bzw. erleichtert wird, worin Y das Kemmolekül darstellt, von dem angenommen wird, daß es

Radikale bildet, X ein übertragbares Atom oder eine übertragbare Atomgruppe repräsentiert und M die Monomeren bezeichnet, während z den Polymerisationsgrad darstellt.

Bevorzugte Übergangsmetalle sind hierbei Cu, Fe, Cr, Co, Ne, Sm, Mn, Mo, Ag, Zn, Pd, Pt, Re, Rh, Ir, In, Yd, und/oder Ru, die in geeigneten Oxidationsstufen eingesetzt werden. Diese Metalle können einzeln sowie als Mischung eingesetzt werden. Es wird angenommen, daß diese Metalle die Redox-Zyklen der Polymerisation katalysieren, wobei beispielsweise das Redoxpaar $Cu^+/Cu^{2+}$ oder $Fe^{2+}/Fe^{3+}$ wirksam ist. Dementsprechend werden die Metallverbindungen als Halogenide, wie beispielsweise Chlorid oder Bromid, als Alkoxid, Hydroxid, Oxid, Sulfat, Phosphat, oder Hexafluorophosphat, Trifluormethansulfat der Reaktionsmischung zugefügt. Zu den bevorzugten metallischen Verbindungen gehören $Cu_2O$, CuBr, CuCl, CuI, $CuN_3$, CuSCN, CuCN, $CuNO_2$, $CuNO_3$, $CuBF_4$, $Cu(CH_3COO)$ $Cu(CF_3COO)$, $FeBr_2$, $RuBr_2$, $CrCl_2$ und $NiBr_2$.

Es können aber auch Verbindungen in höheren Oxidationsstufen, wie beispielsweise $CuBr_2$, $CuCl_2$, CuO, $CrCl_3$, $Fe_2O_3$ und $FeBr_3$, eingesetzt werden. In diesen Fällen kann die Reaktion mit Hilfe klassischer Radikalbildner, wie beispielsweise AIBN initiiert werden. Hierbei werden die Übergangsmetällverbindungen zunächst reduziert, da sie mit den aus den klassischen Radikalbildnern erzeugten Radikalen umgesetzt werden. Es handelt sich hierbei um die Reverse-ATRP, wie diese von Wang und Matyjaszewski in Macromolekules (1995), Bd. 28, S. 7572-7573 beschrieben wurde.

Darüber hinaus können die Übergangsmetalle als Metall in der Oxidationsstufe null, insbesondere in Mischung mit den zuvor genannten Verbindungen zur Katalyse verwendet werden, wie dies beispielsweise in WO 98/40415 dargestellt ist. In diesen Fällen läßt sich die Reaktionsgeschwindigkeit der Umsetzung erhöhen. Man nimmt an, daß hierdurch die Konzentration an katalytisch wirksamer Übergangsmetallverbindung erhöht wird, indem Übergangsmetalle in einer hohen Oxidationsstufe mit metallischem Übergangsmetall komproportionieren.

Im Rahmen der vorliegenden Erfindung ist es besonders vorteilhaft, in Gegenwart von Kupfer als Katalysator zu polymerisieren. Dabei ist im Sinne dieser Ausführungsform der Erfindung diejenige Menge an Kupfer von Bedeutung, die während der Polymerisation in der Polymerisationszusammensetzung als oxidiertes Kupfer der Oxidationsstufen (I) und (II), vorzugsweise der Oxidationsstufe +1, vorliegt. Ob tatsächlich auch Kupfer der Oxidationsstufe (+2) vorliegen kann und wenn ja, ob dies für den Verlauf der Polymerisation Relevanz besitzt, ist für diese Ausführungsform der Erfindung selbst unerheblich. Die Menge an Kupfer der Oxidationsstufe (+2) wird jedoch aufgrund der angewandten Bestimmungsmethoden zusammen mit Kupfer der Oxidationsstufe (+1) bilanziert. Die Menge an Kupfer der Oxidationsstufe (0) in der Polymerisationszusammensetzung kann den Wert von 200 ppm deutlich überschreiten, es besteht keine Einschränkung nach oben, solange die Menge an Kupfer der Oxidationsstufen (I) und (II) gering genug ist.

In Verbindung mit den in der Erfindung eingesetzten Monomeren führen bereits sehr geringe Mengen an Kupfer der Oxidationsstufen (I) und (II) erstaunlicherweise zu vergleichsweise eng verteilten Polymeren. Hierbei beträgt die Menge an oxidiertem Kupfer der Stufen (I) und (II) in der Zusammensetzung vorzugsweise bis zu 200 ppm, insbesondere bis zu 150 ppm und ganz besonders bevorzugt bis zu 100 ppm, bezogen auf das Gewicht der gesamten Zusammensetzung. Die Menge an Kupfer in ppm wird als Summe der Gewichte Cu(I) und Cu(II) bezogen auf das Gewicht der gesamten Zusammensetzung angegeben. Die minimal zur Katalyse der ATRP benötige Menge an oxidiertem Kupfer kann je nach spezieller Polymerisationszusammensetzung über einen gewissen Bereich variieren. Allgemein sind wenigstens 5 bis 10 ppm von Vorteil. Bevorzugt sind mehr als 10 ppm, besonders zweckmäßig 20 und mehr ppm. Ein sehr zweckmäßiger Bereich umfaßt 10 bis 200 ppm, bevorzugt 20 bis 200 ppm und ganz besonders bevorzugt 50 bis 200 ppm. Für die meisten Anwendungen ist der Bereich von 50 bis 100 ppm als optimal anzusehen.

Das für die ATRP von bestimmten längerkettigen Monomeren der Erfindung interessante oxidierte Kupfer kann aus verschiedenen Quellen generiert werden.

In einer ersten und ganz besonders bevorzugten Verfahrensvariante kennzeichnet sich das Verfahren der Erfindung dadurch, daß als Quelle für das Kupfer der Oxidationsstufen (I) und (II) in der Polymerisationszusammensetzung metallisches Kupfer eingesetzt wird.

Metallisches Kupfer kann der Reaktionsmischung in jeder beliebigen Form zugesetzt werden. Vorzugsweise dienen als Kupferquellen unter anderem Kupferblech, Kupferdraht, Kupferfolie, Kupferspäne, Kupfernetz, Kupfergeflecht, Kupfergewebe und/oder Kupferpulver sowie Kupferstaub. Hierbei sind leicht wieder aus der Polymerzusammensetzung entfernbare Quellen, wie Kupferblech, Kupferdraht, Kupferfolie und Kupfergeflecht gegenüber weniger einfach abtrennbaren Quellen wie Kupferpulver oder Kupferstaub bevorzugt.

Erfindungsgemäß ist es besonders vorteilhaft, daß der Katalysator Bestandteil des Reaktormaterials ist oder das gesamte Reaktormaterial bildet. In einer ganz besonders bevorzugten Ausführungsform ist der Reaktor ein Strömungsrohr aus Kupfer.

Eine weitere besondere Variante des erfindungsgemäßen Verfahrens geht davon aus, daß man als Quelle für das Kupfer der Oxidationsstufen (I) und (II) ein Kupfersalz in der Polymerisationszusammensetzung einsetzt. Erfindungsgemäß bevorzugte als Kupferquellen einsetzbare Metallverbindungen umfassen Halogenide, wie beispielsweise Chlorid oder Bromid, als Alkoxid, Hydroxid, Oxid, Sulfat, Phosphat, oder Hexafluorophosphat, Trifluormethansulfat der Reaktionsmischung zugefügt. Zu den bevorzugten metallischen Verbindungen gehören $Cu_2O$, CuBr, CuCl, CuI, $CuN_3$,

CuSCN, CuCN, $CuNO_2$, $CuNO_3$, $CuBF_4$, $Cu(CH_3COO)$ und/oder $Cu(CF_3COO)$.

In einer besonders bevorzugten Ausführungsform der vorliegenden Erfindung wird als Kupfersalz ein Kupferhalogenid, besonders zweckmäßig Kupfer(I)chlorid, einsetzt.

Für die Bestimmung der gemäß vorliegender Erfindung relevanten Menge (Konzentration) an Kupfer der Oxidationsstufen (I) und (II) kann man in Abhängigkeit von der Natur der Kupferquelle beispielsweise folgende Wege einschlagen.

Geht man von metallischem Kupfer als Kupferquelle aus, so kann man die metallische Kupferquelle nach Beendigung der Polymerisation aus der Zusammensetzung entfernen, z. B. aus dem Ansatz herausnehmen oder durch Filtration abtrennen. In der verbliebenen Polymerzusammensetzung kann gegebenenfalls nach Durchführung an sich bekannter Aufschlußverfahren die Kupfermenge z. B. durch ICP-Spektroskopie (Atomemissionsspektroskopie) bestimmt werden. Ermittelt wird demnach die Menge und daraus die Konzentration an Kupfer (I) + Kupfer (II), die im Verlauf der Polymerisation aus der Kupferquelle freigesetzt wurde (oxidiert wurde).

Geht man von einer Kupferverbindung (Kupfersalz) als Quelle aus, so genügt es die Einwaage zu bestimmen und daraus die im System vorhandene maximale Kupfermenge abzuleiten.
Die zuvor genannten Monomere werden mittels Initiatoren, die eine übertragbare Atomgruppe aufweisen, polymerisiert. Im allgemeinen lassen sich diese Initiatoren durch die Formel $Y\text{-}(X)_m$ beschreiben, wobei Y und X die zuvor genannten Bedeutung haben und m eine ganze Zahl im Bereich von 1 bis 10 darstellt, abhängig von der Funktionalität der Gruppe Y. Falls m > 1 ist, können die verschiedenen übertragbaren Atomgruppen X eine unterschiedliche Bedeutung haben. Ist die Funktionalität des Initiators > 2, so werden stemförmige Polymere erhalten. Bevorzugte übertragbare Atome bzw. Atomgruppen sind Halogene, wie beispielsweise Cl, Br und/oder J.

Wie zuvor erwähnt, wird von der Gruppe Y angenommen, daß sie Radikale bildet, die als Startmolekül dienen, wobei sich dieses Radikal an die ethylenisch ungesättigten Monomere anlagert. Daher weist die Gruppe Y vorzugsweise Substituenten auf, die Radikale stabilisieren können. Zu diesen Substituenten gehören unter anderem -CN, -COR und $-CO_2R$, wobei R jeweils ein Alkyl- oder Arylrest darstellt, Aryl- und/oder Heteroaryl-Gruppen.

Alkylreste sind gesättigte oder ungesättigte, verzweigte oder lineare Kohlenwasserstoffreste mit 1 bis 40 Kohlenstoffatomen, wie beispielsweise Methyl, Ethyl, Propyl, Butyl, Pentyl, 2-Methylbutyl, Pentenyl, Cyclohexyl, Heptyl, 2-Methylheptenyl, 3-Methylheptyl, Octyl, Nonyl, 3-Ethylnonyl, Decyl, Undecyl, 4-Propenylundecyl, Dodecyl, Tridecyl, Tetradecyl, Pentadecyl, Hexadecyl, Heptadecyl, Octadecyl, Nonadecyl, Eicosyl, Cetyleicosyl, Docosyl und/oder Eicosyltetratriacontyl.

Arylreste sind cyclische, aromatische Reste, die 6 bis 14 Kohlenstoffatome im aromatischen Ring aufweisen. Diese Reste können substituiert sein. Substituenten sind beispielsweise lineare und verzweigte Alkylgruppen mit 1 bis 6 Kohlenstoffatome, wie beispielsweise Methyl, Ethyl, Propyl, Butyl, Pentyl, 2-Methylbutyl oder Hexyl; Cycloalkylgruppen, wie beispielsweise Cyclopentyl und Cyclohexyl; armoatische Gruppen, wie Phenyl oder Nahphthyl; Aminogruppen, Ethergruppen, Estergruppen sowie Halogenide.

Zu den aromatischen Resten gehören beispielsweise Phenyl, Xylyl, Toluyl, Naphtyl oder Biphenylyl.

Der Ausdruck "Heteroaryl" kennzeichnet ein heteroaromatisches Ringsystem, worin mindestens eine CH-Gruppe durch N oder zwei benachbarte CH-Gruppen durch S, O oder NH ersetzt sind, wie ein Rest von Thiophen, Furan, Pyrrol, Thiazol, Oxazol, Pyridin, Pyrimidin und Benzo[a]furan, die ebenfalls die zuvor genannten Substituenten aufweisen können.

Ein erfindungsgemäß verwendbarer Initiator kann jede Verbindung sein, die ein oder mehrere Atome oder Atomgruppen aufweist, welche unter den Polymerisationsbedingungen radikalisch übertragbar ist.

Geeignete Initiatoren umfassen jene der Formeln:

$$R^{11}R^{12}R^{13}C\text{-}X$$

$$R^{11}C(=O)\text{-}X$$

$$R^{11}R^{12}R^{13}Si\text{-}X$$

$$R^{11}R^{12}N\text{-}X$$

$$R^{11}N\text{-}X_2$$

$$(R^{11})_nP(O)_m\text{-}X_{3-n}$$

$$(R^{11}O)_nP(O)\ m\text{-}X_{3-n}$$

und

$(R^{11})(R^{12}O)P(O)_m$-X,

worin X ausgewählt ist aus der Gruppe bestehend aus Cl, Br, I, $OR^{10}$, [wobei $R^{10}$ eine Alkylgruppe von 1 bis 20 Kohlenstoffatomen, wobei jedes Wasserstoffatom unabhängig durch ein Halogenid, vorzugsweise Flurid oder Chlorid ersetzt sein kann, Alkenyl von 2 bis 20 Kohlenstoffatomen, vorzugsweise Vinyl, Alkynyl von 2 bis 10 Kohlenstoffatomen vorzugsweise Acetylenyl, Phenyl, welches mit 1 bis 10 Halogenatomen oder Alkylgruppen mit 1 bis 4 Kohlenstoffatomen substituiert sein kann, oder Aralkyl (arylsubstituiertes Alkyl in welchem die Arylgruppe Phenyl oder substituiertes Phenyl und die Alkylgruppe ein Alkyl mit 1 bis 6 Kohlenstoffatomen darstellt, wie beispielsweise Benzyl) bedeutet;] $SR^{14}$, $SeR^{14}$, $OC(=O)R^{14}$, $OP(=O)R^{14}$, $OP(=O)(OR^{14})_2$, $OP(=O)OR^{14}$, $O\text{-}N(R^{14})_2$, $S\text{-}C(=S)N(R^{14})_2$, CN, NC, SCN, CNS, OCN, CNO und $N_3$ darstellt, wobei $R^{14}$ eine Arylgruppe oder eine lineare oder verzweigte Alkylgruppe mit 1 bis 20, vorzugsweise 1 bis 9 Kohlenstoffatomen bedeutet, wobei zwei $R^{14}$-Gruppen, falls vorhanden, zusammen einen 5, 6 oder 7-gliedrigen heterocyclischen Ring bilden können; und

$R^{11}$, $R^{12}$ und $R^{13}$ unabhängig ausgewählt sind aus der Gruppe bestehend aus Wasserstoff, Halogene, Alkylgruppen mit 1 bis 20, vorzugsweise 1 bis 10 und besonders bevorzugt 1 bis 6 Kohlenstoffatomen, Cycloalkylgruppen mit 3 bis 8 Kohlenstoffatomen, $R^{8*}{}_3Si$, $C(=Y^*)R^{5*}$, $C(=Y^*)NR^{6*}R^{7*}$, wobei $Y^*$, $R^{5*}$, $R^{6*}$ und $R^{7*}$ wie zuvor definiert sind, COCl, OH, (vorzugsweise ist einer der Reste $R^{11}$, $R^{12}$ und $R^{13}$ OH), CN, Alkenyl- oder Alkynylgruppen mit 2 bis 20 Kohlenstoffatomen, vorzugsweise 2 bis 6 Kohlenstoffatomen und besonders bevorzugt Allyl oder Vinyl, Oxiranyl, Glycidyl, Alkylen- oder Alkenylengruppen mit 2 bis 6 Kohlenstoffatomen, welche mit Oxiranyl oder Glycidyl, Aryl, Heterocyclyl, Aralkyl, Aralkenyl (arylsubsituiertes Alkenyl, wobei Aryl wie zuvor definiert ist und Alkenyl Vinyl ist, welches mit ein oder zwei $C_1$ bis $C_6$ Alkylgruppen und/oder Halogenatomen, vorzugsweise mit Chlor substituiert ist) substituiert sind, Alkylgruppen mit 1 bis 6 Kohlenstoffatomen, in welchen ein bis alle der Wasserstoffatome, vorzugsweise eines, durch Halogen substituiert sind, (vorzugsweise Fluor oder Chlor, wenn ein oder mehr Wasserstoffatome ersetzt sind, und vorzugsweise Fluor, Chlor oder Brom, falls ein Wasserstoffatom ersetzt ist) Alkylgruppen mit 1 bis 6 Kohlenstoffatomen, die mit 1 bis 3 Substituenten (vorzugsweise 1) ausgewählt aus der Gruppe bestehend aus $C_1$-$C_4$ Alkoxy, Aryl, Heterocyclyl, $C(=Y^*)R^{5*}$ (wobei $R^{5*}$ wie zuvor definiert ist), $C(=Y^*)NR^{6*}R^{7*}$ (wobei $R^{6*}$ und $R^{7*}$ wie zuvor definiert sind), Oxiranyl und Glycidyl substituiert sind; (vorzugsweise sind nicht mehr als 2 der Reste $R^{11}$, $R^{12}$ und $R^{13}$ Wasserstoff, besonders bevorzugt ist maximal einer der Reste $R^{11}$, $R^{12}$ und $R^{13}$ Wasserstoff); m=0 oder 1; und m=0, 1 oder 2 darstellt.

Zu den besonders bevorzugten Initiatoren gehören Benzylhalogenide, wie p-Chlormethylstyrol, α-Dichlorxylol, α,α-Dichlorxylol, α,α-Dibromxylol und Hexakis(α-brommethyl)benzol, Benzylchlorid, Benzylbromid, 1-Brom-1-phenylethan und 1-Chlor-1-phenylethan; Carbonsäurederivate, die an der α-Position halogeniert sind, wie beispielsweise Propyl-2-brompropionat, Methyl-2-chlorpropionat, Ethyl-2-chlorpropionat, Methyl-2-brompropionat, Ethyl-2-bromisobutyrat; Tosylhalogenide, wie p-Toluolsulfonylchlorid; Alkylhalogenide, wie Tetrachlormethan, Tribrommethan, 1-Vinylethylchlorid, 1-Vinylethylbromid; und Halogenderivate von Phosphorsäureestern, wie Dimethylphosphorsäurechlorid.

Der Initiator wird im allgemeinen in einer Konzentration im Bereich von $10^{-4}$ mol/L bis 3 mol/L, vorzugsweise im Bereich von $10^{-3}$ mol/L bis $10^{-1}$ mol/L und besonders bevorzugt im Bereich von $5*10^{-2}$ mol/L bis $5*10^{-1}$ mol/L eingesetzt, ohne daß hierdurch eine Beschränkung erfolgen soll. Aus dem Verhältnis Initiator zu Monomer ergibt sich das Molekulargewicht des Polymeren, falls das gesamte Monomer umgesetzt wird. Vorzugsweise liegt dieses Verhältnis im Bereich von $10^{-4}$ zu 1 bis 0,5 zu 1, besonders bevorzugt im Bereich von $1*10^{-3}$ zu 1 bis $5*10^{-2}$ zu 1.

Die Polymerisation findet in Gegenwart von Liganden statt, die mit dem oder den metallischen Katalysatoren eine Koordinationsverbindung bilden können. Diese Liganden dienen unter anderem zur Erhöhung der Löslichkeit der Übergangsmetallverbindung. Eine weitere wichtige Funktion der Liganden besteht darin, daß die Bildung von stabilen Organometallverbindungen vermieden wird. Dies ist besonders wichtig, da diese stabilen Verbindungen bei den gewählten Reaktionsbedingungen nicht polymerisieren würden. Des weiteren wird angenommen, daß die Liganden die Abstraktion der übertragbaren Atomgruppe erleichtern.

Diese Liganden sind an sich bekannt und beispielsweise in WO 97/18247, WO 98/40415 beschrieben. Diese Verbindungen weisen im allgemeinen ein oder mehrere Stickstoff-, Sauerstoff-, Phosphor- und/oder Schwefelatome auf, über die das Metallatom gebunden werden kann. Viele dieser Liganden lassen sich im allgemeinen durch die Formel $R^{16}\text{-}Z\text{-}(R^{18}\text{-}Z)_m\text{-}R^{17}$ darstellen, worin $R^{16}$ und $R^{17}$ unabhängig H, $C_1$ bis $C_{20}$ Alkyl, Aryl, Heterocyclyl bedeuten, die ggf. substituiert sein können. Zu diesen Substituenten zählen u. a. Alkoxyreste und die Alkylaminoreste. $R^{16}$ und $R^{17}$ können ggf. einen gesättigten, ungesättigten oder heterocyclischen Ring bilden. Z bedeutet O, S, NH, $NR^{19}$ oder $PR^{19}$, wobei $R^{19}$ die gleiche Bedeutung wie $R^{16}$ hat. $R^{18}$ bedeutet unabhängig eine divalente Gruppe mit 1 bis 40 C-Atomen, vorzugsweise 2 bis 4 C-Atomen, die linear, verzweigt oder cyclisch sein kann, wie beispielsweise eine Methylen-, Ethylen-, Propylen- oder Butylengruppe. Die Bedeutung von Alkyl und Aryl wurde zuvor dargelegt. Heterocyclylreste sind cyclische Reste mit 4 bis 12 Kohlenstoffatome, bei denen ein oder mehrere der $CH_2$-Gruppen des Ringes durch Heteroatomgruppen, wie O, S, NH, und/oder NR, ersetzt sind, wobei der Rest R, die gleich Bedeutung hat, wie $R^{16}$ hat.

Eine weitere Gruppe von geeigneten Liganden läßt sich durch die Formel

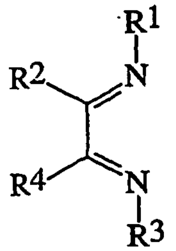

(VII)

darstellen, worin $R^1$, $R^2$, $R^3$ und $R^4$ unabhängig H, $C_1$ bis $C_{20}$ Alkyl-, Aryl-, Heterocyclyl- und/oder Heteroarylrest bedeuten, wobei die Reste $R^1$ und $R^2$ bzw. $R^3$ und $R^4$ zusammen einen gesättigten oder ungesättigten Ring bilden können.

Bevorzugte Liganden sind hierbei Chelatliganden, die N-Atome enthalten.

Zu den bevorzugten Liganden gehören unter anderem Triphenylphosphan, 2,2-Bipyridin, Alkyl-2,2-bipyridin, wie 4,4-Di-(5-nonyl)-2,2-bipyridin, 4,4-Di-(5-heptyl)-2,2 Bipyridin, Tris(2-aminoethyl)amin (TREN), N,N,N',N',N"-Pentamethyldiethylentriamin, 1,1,4,7,10,10-Hexamethyltriethlyentetramin und/oder Tetramethytethylendiamin. Weitere bevorzugte Liganden sind beispielsweise in WO 97/47661 beschrieben. Die Liganden können einzeln oder als Mischung eingesetzt werden.

Diese Liganden können in situ mit Kupfermetall oder den Kupferverbindungen Koordinationsverbindungen bilden oder sie können zunächst als Koordinationsverbindungen hergestellt werden und anschließend in die Reaktionsmischung gegeben werden.

Das Verhältnis Ligand zu Übergangsmetall Kupfer ist abhängig von der Zähnigkeit des Liganden und der Koordinationszahl des Kupfers. Im allgemeinen liegt das molare Verhältnis im Bereich 100:1 bis 0,1:1, zweckmäßig 10: 1 bis 0,1:1, vorzugsweise 6:1 bis 0,1:1 und besonders bevorzugt 3:1 bis 0,5:1, ohne daß hierdurch eine Beschränkung erfolgen soll.

Je nach erwünschter Polymerlösung werden die Monomere, die Kupferkatalysatoren, die Liganden und die Initiatoren ausgewählt. Es wird angenommen, daß eine hohe Geschwindigkeitskonstante der Reaktion zwischen dem Kupfer-Ligand-Komplex und der übertragbaren Atomgruppe wesentlich für eine enge Molekulargewichtsverteilung ist. Ist die Geschwindigkeitskonstante dieser Reaktion zu gering, so wird die Konzentration an Radikalen zu hoch, so daß die typischen Abbruchreaktionen auftreten, die für eine breite Molekulargewichtsverteilung verantwortlich sind. Die Austauschrate ist beispielsweise abhängig von der übertragbaren Atomgruppe, dem Übergangsmetall und den Liganden.

Das Verfahren der vorliegenden Erfindung kann ohne Lösungsmittel als Polymerisation in Masse durchgeführt werden. Die Polymerisation in "bulk" führt bereits zu sehr guten Ergebnissen. In bevorzugten Ausführungsformen des Verfahrens werden unpolare Lösungsmittel eingesetzt. Allerdings darf die Konzentration an Kupfer der Oxidationsstufen (I) und (II) nicht die zuvor genannten Werte übersteigen.

Zu den unpolaren Lösungsmitteln gehören Kohlenwasserstofflösungsmittel, wie beispielsweise aromatische Lösungsmittel, wie Toluol, Benzol und Xylol, gesättigte Kohlenwasserstoffe, wie beispielsweise Cyclohexan, Heptan, Octan, Nonan, Decan, Dodecan, die auch verzweigt vorliegen können. Diese Lösungsmittel können einzeln sowie als Mischung verwendet werden. Besonders bevorzugte Lösungsmittel sind Mineralöle und synthetische Öle sowie Mischungen hiervon. Von diesen sind Mineralöle ganz besonders bevorzugt.

Mineralöle sind an sich bekannt und kommerziell erhältlich. Sie werden im allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im allgemeinen liegt der Siedepunkt von Mineralöl höher als 200 °C, vorzugsweise höher als 300 °C, bei 5000 Pa. Die Herstellung durch Schwelen von Schieferöl, Verkoken von Steinkohle, Destillation unter Luftabschluß von Braunkohle sowie Hydrieren von Stein- oder Braunkohle ist ebenfalls möglich. Zu einem geringen Anteil werden Mineralöle auch aus Rohstoffen pflanzlichen (z. B. aus Jojoba, Raps) od. tierischen (z. B. Klauenöl) Ursprungs hergestellt. Dementsprechend weisen Mineralöle, je nach Herkunft unterschiedliche Anteile an aromatischen, cyclischen, verzweigten und linearen Kohlenwasserstoffen auf.

Im allgemeinen unterscheidet man paraffinbasische, naphthenische und aromatische Anteile in Rohölen bzw. Mineralölen, wobei die Begriffe paraffinbasischer Anteil für längerkettig bzw. stark verzweigte iso-Alkane und naphthenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigten Paraffine, und Verbindungen mit Heteroatomen, insbesondere O, N und/oder S auf, denen polare Eigenschaften zugesprochen werden. Der Anteil der n-Alkane beträgt in bevorzugten Mineralölen weniger als 3 Gew.-%, der Anteil der O, N und/oder S-haltigen Verbindungen weniger als 6 Gew.-%. Der Anteil der Aromaten und der monomethylverzweigten Paraffine liegt im allgemeinen jeweils im Bereich von 0 bis 30 Gew.-%. Gemäß einem interessanten Aspekt umfaßt

Mineralöl hauptsächlich naphthenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im allgemeinen ≥ 60 Gew.-%, vorzugsweise ≥ 80 Gew.-%, ohne daß hierdurch eine Beschränkung erfolgen soll.

Eine Analyse von besonders bevorzugten Mineralölen, die mittels herkömmlicher Verfahren, wie Harnstofftrennung und Flüssigkeitschromatogräphie an Kieselgel, erfolgte, zeigt beispielsweise folgende Bestandteile, wobei sich die Prozentangaben auf das Gesamtgewicht des jeweils eingesetzten Mineralöls beziehen:

n-Alkane mit ca. 18 bis 31 C-Atome:
0.7 - 1,0 %,
gering verzweigte Alkane mit 18 bis 31 C-Atome:
1,0 - 8,0 %,
Aromaten mit 14 bis 32 C-Atomen:
0,4 - 10,7 %,
Iso- und Cyclo-Alkane mit 20 bis 32 C-Atomen:
60,7 - 82,4 %,
polare Verbindungen:
0,1 - 0,8 %,
Verlust:
6,9 - 19,4 %.

Wertvolle Hinweise hinsichtlich der Analyse von Mineralölen sowie eine Aufzählung von Mineralölen, die eine abweichende Zusammensetzung aufweisen, findet sich beispielsweise in Ullmanns Encyclopedia of Industrial Chemistry, $5^{th}$ Edition on CD-ROM, 1997, Stichwort "lubricants and related products".

Synthetische Öle sind unter anderem organische Ester, organische Ether, wie Siliconöle, und synthetische Kohlenwasserstoffe, insbesondere Polyolefine. Sie sind meist etwas teurer als die mineralischen Öle, haben aber Vorteile hinsichtlich ihrer Leistungsfähigkeit. Zur Verdeutlichung soll noch auf die 5 API-Klassen der Grundöltypen (API: American Petroleum Institute) hingewiesen werden, wobei diese Grundöle besonders bevorzugt als Lösungsmittel eingesetzt werden können.

Diese Lösungsmittel werden vor oder während der Filtration, vorzugsweise in einer Menge von 1 bis 99 Gew.-%, besonders bevorzugt von 5 bis 95 Gew.-% und ganz besonders bevorzugt von 10 bis 60 Gew.-%, bezogen auf das Gesamtgewicht der Mischung, eingesetzt.

Die Polymerisation kann bei Normaldruck, Unter- od. Überdruck durchgeführt werden. Auch die Polymerisationstemperatur ist unkritisch. Im allgemeinen liegt sie jedoch im Bereich von -20° - 200°C, vorzugsweise 0° - 130°C und besonders bevorzugt 60° - 120°C, ohne daß hierdurch eine Beschränkung erfolgen soll.

Mit Hilfe des vorliegenden Verfahrens können Polymere mit einer vorgegebenen Architektur auf einfache Weise erhalten werden. Diese Möglichkeiten ergeben sich aus dem "lebenden" Charakter des Polymerisationsverfahrens. Zu diesen Strukturen gehören unter anderem Blockcopolymere, wie Diblock- und Triblockcopolymere, Gradientencopolymere, Sternpolymere, hochverzweigte Polymere, Polymere mit reaktiven Endgruppen und Pfropfcopolymere. Erfindungsgemäß bevorzugt werden Copolymere mit einem nichtstatistischen Aufbau, insbesondere Diblock-, Triblock- oder Gradientenpolymere, die beispielsweise erhalten werden können, indem man eine zweite und gegebenenfalls weitere Monomermischungen einem Polymer zudosiert, welches zuvor in einem erfindungsgemäßen Prozeß synthetisiert wurde.

Im Rahmen der vorliegenden Erfindung ist auch ein Verfahren vorteilhaft, welches die Schritte aufweist, daß man

a) ethylenisch ungesättigte Monomere erfindurigsgemäß mittels kontinuierlicher Prozeßführung polymerisiert,

b) das metallhaltige Reaktionsprodukt aus a) einer Monomervorlage zuführt und

c) zu einer Zusammensetzung enthaltend ethylenisch ungesättigte Monomere zudosiert und auf diese Weise eine weitere ATRP-Polymerisation initiiert,

wobei die Polymerisation in c) im Batch- oder im kontinuierlichen Verfahren erfolgt.

Ebenfalls vorteilhaft ist ein Verfahren, welches die Schritte aufweist, daß man

a) ethylenisch ungesättigte Monomere mittels Initiatoren, die eine übertragbare Atomgruppe aufweisen, und einem oder mehreren Katalysatoren, die mindestens ein Übergangsmetall umfassen, in Gegenwart von Liganden, die mit dem oder den metallischen Katalysatoren eine Koordinationsverbindung bilden können, im Batchverfahren polymerisiert,

b) das metallhaltige Reaktionsprodukt aus a) einer Monomervorlage zuführt und

c) zu einer Zusammensetzung enthaltend ethylenisch ungesättigte Monomere zudosiert und auf diese Weise eine weitere ATRP-Polymerisation initiiert,

wobei die Polymerisation in c) im Batch- oder im kontinuierlichen Verfahren erfolgt.

Die erfindungsgemäß hergestellten Polymere weisen im allgemeinen ein Molekulargewicht im Bereich von 1 000 bis 1 000 000 g/mol, vorzugsweise im Bereich von $7*10^3$ bis $500*10^3$ g/mol, besonders bevorzugt im Bereich von $7*10^3$ bis $300*10^3$ g/mol, auf, ohne daß hierdurch eine Beschränkung erfolgen soll. Diese Werte beziehen sich auf das Gewichtsmittel des Molekulargewichts der polydispersen Polymere in der Zusammensetzung.

Der besondere Vorteil von ATRP im Vergleich zur herkömmlichen radikalischen Polymerisationsverfahren besteht darin, daß Polymere mit enger Molekulargewichtsverteilung hergestellt werden können. Ohne daß hierdurch eine Beschränkung erfolgen soll, weisen Polymere, die nach dem erfindungsgemäßen Verfahren erhalten wurden, eine Polydispersität, die durch $M_w/M_n$ gegeben ist, im Bereich von 1 bis 12, vorzugsweise 1 bis 4,5, besonders bevorzugt 1 bis 3 und ganz besonders bevorzugt 1,05 bis 2 auf.

Die geringen Mengen an Katalysator, wie sie erfindungsgemäß typisch sind, stören im allgemeinen in den angestrebten Anwendungen nicht, so daß keine Abtrennung des Katalysators durchgeführt werden muß.

Für besondere Anwendungen, in denen selbst die geringen erfindungsgemäßen Mengen stören sollten, kann gelöster Katalysator durch ein Fest-Flüssig-Trennverfahren abgetrennt werden. Hierzu gehören beispielsweise die Chromatographie, die Zentrifugation und die Filtration.

Vorzugsweise wird der Katalysator durch Filtration entfernt. Dazu wird nach der Polymerisation die Oxidationsstufe des Übergangsmetalls erhöht. Durch die Oxidation des Übergangsmetalls nimmt die Löslichkeit des Katalysators, je nach Wahl des oder der Liganden ab, so daß das Übergangsmetall durch Filtration abgetrennt werden kann, falls ein Lösungsmittel, insbesondere ein Mineralöl vorhanden ist, dessen Dielektrizitätskonstante $\leq 4$, vorzugsweise $\leq 3$ und besonders bevorzugt $\leq 2,5$ ist.

Die Oxidation des Übergangsmetalls kann mit bekannten Oxidationsmitteln wie beispielsweise Sauerstoff, $H_2O_2$ oder Ozon durchgeführt werden. Vorzugsweise wird der Katalysator mit Luftsauerstoff oxidiert. Es ist keine vollständige Oxidation des Übergangsmetalls oder der Übergangsmetallverbindung notwendig. In vielen Fällen genügt ein Kontakt der Zusammensetzung mit Luftsauerstoff von wenigen Minuten, um eine ausreichende Ausfällung der Übergangsmetallverbindung zu gewährleisten.

Das Filtrieren ist an sich bekannt und beispielsweise in Ullmann's Encyclopedia of Industrial Chemistry, Fifth Edition, Stichwort "Filtration", beschrieben. Vorzugsweise wird die Zusammensetzung bei einer Druckdifferenz im Bereich von 0,1 bis 50 bar, vorzugsweise 1 bis 10 bar und besonders bevorzugt 1,5 bis 2,5 bar mit einem Filter einer Siebgröße im Bereich von 0,01 $\mu$m bis 1 mm, vorzugsweise 1 $\mu$m bis 100 $\mu$m und besonders bevorzugt 10 $\mu$m bis 100 $\mu$m gereinigt. Diese Angaben dienen als Anhaltspunkte, da die Reinigung auch von der Viskosität des Lösungsmittels und der Korngröße des Niederschlags abhängig ist.

Die Filtration findet in einem ähnlichen Temperaturbereich wie die Polymerisation statt, wobei der obere Bereich von der Stabilität des Polymeren abhängig ist. Die untere Grenze ergibt sich aus der Viskosität der Lösung.

Die so hergestellte Poly(meth)acrylatzusammensetzung kann ohne weitere Reinigung beispielsweise als Additiv in Schmierölen verwendet werden. Darüber hinaus kann aus der Zusammensetzung das Polymer isoliert werden. Hierzu können die Polymere durch Fällung aus der Zusammensetzung abgeschieden werden.

Nachfolgend wird die Erfindung durch Beispiele und Vergleichsbeispiele eingehender erläutert, ohne daß die Erfindung auf diese Beispiele beschränkt werden soll.

Edukte:

Das verwendete DPMA (Dodecylpentadecylmethacrylat) wurde unter Berücksichtigung eines Reinheitsgrades von 98 % eingewogen. EBiB (Ethyl-2-bromoisobutyrat) und PMDETA (Pentamethyldiethylentriamin) wurden von Aldrich bezogen und ebenso wie MMA (Methylmethacrylat; Rohm&Haas) unter Annahme eines 100%-igen Reinheitsgrades eingewogen. Das verwendete paraffinische Öl war ein 100N-Öl des Herstellers Petro Canada.

Beispiel 1:

Für einen kontinuierlichen ATRP-Ansatz wurde ein 2 m langes, 7 mm dickes, gewundenes Kupferrohr (Wanddurchmesser 2 mm) in ein beheizbares Wasserbad getaucht. Mit Hilfe einer Dosierpumpe wurde dem Rohr 500 ml einer Mischung bestehend aus 425 ml Dodecylpentadecylmethacrylat (DPMA) und Methylmethacrylat (MMA) im Gewichtsverhältnis 0,85:0,15; 75 ml eines 100N-Öles, 10 mmol Pentamethyldiethylentriamine (PMEDTA) sowie 10,25 mmol Ethyl-2-bromo-isobutyrat (EBiB) zugespeist. Dies entspricht einem Zielmotekulargewicht von 80.000 g/mol. Die Dosierrate wurde so eingestellt, daß eine Verweildauer von 3 h 45 min. - 4 h im auf 90°C aufgeheizten Kupferrohr gewährleistet war. Das entstandene Polymerisat wies eine leicht grünliche Farbe auf und wurde direkt nach Durchlaufen des Kupferrohres kontinuierlich aufgefangen. Eine GPC-Analyse des Reaktionsgutes wurde periodisch durchgeführt und lieferte die in Tabelle 1 gezeigten Werte. Die gute Übereinstimmung zwischen theoretischen und experimentellen Mn-Werten sowie die enge Molekulargewichtsverteilung belegen, daß ein kontrollierter Polymerisationsablauf stattfand. Die Umsatzrate lag bei 98 %.

Tabelle 1. Mn- sowie PDI-Werte eines kontinuierlich geführten ATRP-Prozesses in Abhängigkeit von der Prozeßdauer (Verweilzeit der Monomermischung im Reaktor blieb konstant bei etwa 4 h).

| **Probe** | **Zeit [h]** | **Mn [g/mol]** | **PDI** |
|---|---|---|---|
| 1-1 | 1 | 46.500 | 1,72 |
| 1-2 | 3 | 45.900 | 1,5 |
| 1-3 | 4 | 52.700 | 1,47 |
| 1-4 | 27 | 88.400 | 1,42 |

Beispiel 2:

Für einen kontinuierlichen ATRP-Ansatz wurde ein 2 m langes, 7 mm dickes, gewundenes Kupferrohr (Wanddurchmesser 2 mm) in ein beheizbares Wasserbad getaucht. Mit Hilfe einer Dosierpumpe wurde dem Rohr 50,0 ml einer Mischung bestehend aus 42,5 ml Dodecylpentadecylmethacrylat (DPMA) und Methylmethacrylat (MMA) im Gewichtsverhältnis 0,85:0,15; 7,5 ml eines 100N-Öles, 10 mmol Pentamethyldiethylentriamine (PMEDTA) sowie 10,25 mmol Ethyl-2-bromo-isobutyrat (EBIB) zugespeist. Dies entspricht einem Zielmolekulargewicht von 8.000 g/mol.

Das Reaktionsprodukt des hiermit durchgeführten, kontinuierlichen Prozesses wurde zu 450 ml einer Mischung bestehend aus 382,5 ml Dodecylpentadecylmethacrylat (DPMA) und Methylmethacrylat (MMA) im Gewichtsverhältnis 0,85:0,15 und 67,5 ml eines 100N-Öles nach einer Durchlaufzeit von etwa 45 Min. im Kupferrohr direkt zugegeben und es wurde hiernach im Batch bei 90°C weiter polymerisiert.

Die GPC-Analyse des kontinuierlich synthetisierten Polymerisats von dem ersten Reaktionsschritt ergab einen Mn-Wert von 14.000, einen Mw/Mn-Wert von 1,16 sowie eine Umsatzrate von 95 %. Die GPC-Ergebnisse für den zweiten Reaktionsschritt, d. h. die Batch-Polymerisation, sind in Tabelle 2 zusammengefaßt. Sie belegen wiederum, daß eine kontrollierte Polymerisation stattfand. Die Umsatzrate lag bei 98 %. Folglich reicht die Zugabe eines geringen Volumens eines kontinuierlich hergestellten Polymerisats zu einer Monomervorlage (Vol.-Verh. kupferhaltiger Vorlauf : Monomervorlage = 0,1 : 1) aus, um einen ATRP-Prozess zu führen.

Tabelle 2. Mn- und PDI-Werte eines ATRP-Batchverfahrens, welches durch Zugabe eines kontinuierlich hergestellten ATRP-Produktes katalysiert wurde.

| **Probe** | **Zeit [h]** | **Mn [g/mol]** | **PDI** |
|---|---|---|---|
| 2-1 | 4 | 25.400 | 1,17 |
| 2-2 | 10 | 122.000 | 1,32 |

Im Rahmen der vorliegenden Erfindung kann der Begriff "Monomervorlage" ein Reaktionsgefäß oder eine Vorrichtung mit einem oder mehreren Monomeren sowie gegebenenfalls weiteren Komponenten bedeuten. Nach Zugabe geeigneter Stoffe oder Stoffgemische kann dann eine Reaktion, z. B. Polymerisation, eintreten. Der Begriff "Monomervorlage" kann aber auch im Sinne eines Gefäßes oder eines Behälters verwendet werden, welcher nur zur vorübergehenden Aufnahme eines Stoffes oder Stoffgemisches dient, zum Beispiel zur Zwischenlagerung einer Reaktionsmischung.

## Patentansprüche

1. Verfahren zur Herstellung von Polymerzusammensetzungen, bei dem man ethylenisch ungesättigte Monomere mittels Initiatoren, die eine übertragbare Atomgruppe aufweisen, und einem oder mehreren Katalysatoren, die mindestens ein Übergangsmetall umfassen, in Gegenwart von Liganden, die mit dem oder den metallischen Katalysatoren eine Koordinationsverbindung bilden können, polymerisiert, **dadurch gekennzeichnet, daß** die Polymerisation mittels kontinuierlicher Prozeßführung erfolgt.

2. Verfahren gemäß Anspruch 1, **dadurch gekennzeichnet, daß** der Katalysator Bestandteil des Reaktormaterials ist oder das gesamte Reaktormaterial bildet.

3. Verfahren gemäß einem oder mehreren der vorhergehenden Ansprüche, **dadurch gekennzeichnet, daß** man Kupfer als Katalysator verwendet, wobei die gesamte Konzentration an Kupfer der Oxidationsstufen (I) und (II) in der Polymerisationszusammensetzung ≤ 200 ppm, bezogen auf das gesamte Gewicht der Zusammensetzung, ist.

4. Verfahren gemäß einem oder mehreren der vorhergehenden Ansprüche, **dadurch gekennzeichnet, daß** die gesamte Konzentration an Kupfer der Oxidationsstufen (I) und (II) in der Zusammensetzung ≤ 150 ppm, vorzugsweise ≤ 100 ppm, bezogen auf das gesamte Gewicht der Zusammensetzung, ist.

5. Verfahren gemäß einem oder mehreren der vorhergehenden Ansprüche, **dadurch gekennzeichnet, daß** als Quelle für das Kupfer der Oxidationsstufen (I) und (II) in der Polymerisationszusammensetzung metallisches Kupfer eingesetzt wird.

6. Verfahren gemäß Anspruch 5, **dadurch gekennzeichnet, daß** man als Kupferquelle Kupferblech, Kupferdraht, Kupferfolie, Kupferspäne, Kupfernetz, Kupfergeflecht, Kupfergewebe und/oder Kupferpulver einsetzt.

7. Verfahren gemäß einem oder mehreren der vorhergehenden Ansprüche, **dadurch gekennzeichnet, daß** man mindestens einen Chelatliganden einsetzt, der N-Atome enthält.

8. Verfahren gemäß einem oder mehreren der vorhergehenden Ansprüche, **dadurch gekennzeichnet, daß** man einen Initiator einsetzt, der Cl, Br, I, SCN und/oder $N_3$ aufweist.

9. Verfahren gemäß einem oder mehreren der vorhergehenden Ansprüche, **dadurch gekennzeichnet, daß** man in Lösung polymerisiert.

10. Verfahren gemäß einem oder mehreren der vorhergehenden Ansprüche, **dadurch gekennzeichnet, daß** man ein Mineralöl und/oder ein synthetisches Öl als Lösungsmittel einsetzt.

11. Verfahren gemäß Anspruch 10, **dadurch gekennzeichnet, daß** man das Lösungsmittel in einer Menge im Bereich von 5 bis 95 Gew.-%, bezogen auf das Gesamtgewicht der flüssigen Zusammensetzung, einsetzt.

12. Verfahren gemäß Anspruch 11, **dadurch gekennzeichnet, daß** man das Lösungsmittel in einer Menge im Bereich von 10 bis 60 Gew.-%, bezogen auf das Gesamtgewicht der flüssigen Zusammensetzung, einsetzt.

13. Verfahren aufweisend die Schritte, daß man

a) ethylenisch ungesättigte Monomere nach einem Verfahren gemäß einem oder mehreren der vorhergehenden Ansprüche polymerisiert,
b) das metallhaltige Reaktionsprodukt aus a) einer Monomervorlage zuführt und
c) zu einer Zusammensetzung enthaltend ethylenisch ungesättigte Monomere zudosiert und auf diese Weise eine weitere ATRP-Polymerisation initiiert,

wobei die Polymerisation in c) im Batch- oder im kontinuierlichen Verfahren erfolgt.

14. Verfahren aufweisend die Schritte, daß man

a) ethylenisch ungesättigte Monomere mittels Initiatoren, die eine übertragbare Atomgruppe aufweisen, und einem oder mehreren Katalysatoren, die mindestens ein Übergangsmetall umfassen, in Gegenwart von Liganden, die mit dem oder den metallischen Katalysatoren eine Koordinationsverbindung bilden können, im Batchverfahren polymerisiert,
b) das metallhaltige Reaktionsprodukt aus a) einer Monomervorlage zuführt und
c) zu einer Zusammensetzung enthaltend ethylenisch ungesättigte Monomere zudosiert und auf diese Weise eine weitere ATRP-Polymerisation initiiert,

wobei die Polymerisation in c) im Batch- oder im kontinuierlichen Verfahren erfolgt.

**15.** Verfahren gemäß einem oder mehreren der vorhergehenden Ansprüche, **dadurch gekennzeichnet, daß** die ethylenisch ungesättigten Monomere 50 bis 100 Gew.-%, bezogen auf das Gesamtgewicht der ethylenisch ungesättigten Monomere, einer oder mehreren ethylenisch ungesättigten Esterverbindungen der Formel (I)

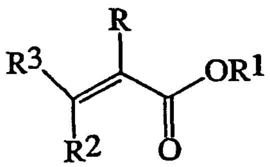

(I),

worin R Wasserstoff oder Methyl, $R^1$ einen linearen oder verzweigten Alkylrest mit 8 bis 40, vorzugsweise 10 bis 40, Kohlenstoffatomen, $R^2$ und $R^3$ unabhängig Wasserstoff oder eine Gruppe der Formel -COOR' bedeuten, wobei R' Wasserstoff oder einen linearen oder verzweigten Alkylrest mit 8 bis 40, vorzugsweise 10 bis 40, Kohlenstoffatomen darstellt, aufweisen.

**16.** Verfahren nach einem oder mehreren der vorhergehenden Ansprüche, **dadurch gekennzeichnet, daß** man eine Monomerzusammensetzung polymerisiert aufweisend mindestens 50 Gew.-% eines oder mehrerer (Meth)acrylate der Formel (II)

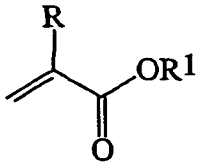

(II),

worin
R Wasserstoff oder Methyl und $R^1$ einen linearen oder verzweigten Alkylrest mit 8 bis 40, vorzugsweise 10 bis 40, Kohlenstoffatomen bedeuten.

**17.** Verfahren nach einem oder mehreren der vorhergehenden Ansprüche, **dadurch gekennzeichnet, daß** man eine Monomerzusammensetzung polymerisiert aufweisend

a) 60 bis 100 Gew.-% einer oder mehreren ethylenisch ungesättigten Esterverbindungen der Formel (I)

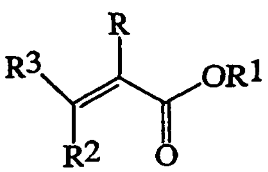

(I),

worin R Wasserstoff oder Methyl, $R^1$ einen linearen oder verzweigten Alkylrest mit 8 bis 40, vorzugsweise 10 bis 40, Kohlenstoffatomen, $R^2$ und $R^3$ unabhängig Wasserstoff oder eine Gruppe der Formel -COOR' bedeuten, wobei R' Wasserstoff oder einen linearen oder verzweigten Alkylrest mit 8 bis 40, vorzugsweise 10 bis 40, Kohlenstoffatomen darstellt,
b) 0 bis 40 Gew.-% eines oder mehrerer (Meth)acrylate der Formel (III)

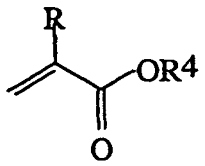

(III),

worin R Wasserstoff oder Methyl und $R^4$ einen linearen oder verzweigten Alkylrest mit 1 bis 7 Kohlenstoffatomen bedeuten,

c) 0 bis 40 Gew.-% eines oder mehrerer (Meth)acrylate der Formel (IV)

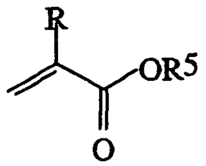

(IV),

worin R Wasserstoff oder Methyl und $R^5$ einen mit einer OH-Gruppe substituierten Alkylrest mit 2 bis 20 Kohlenstoffatomen oder einen alkoxylierten Rest der Formel (V)

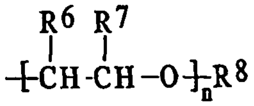

(V),

worin $R^6$ und $R^7$ unabhängig für Wasserstoff oder Methyl, $R^8$ Wasserstoff oder einen Alkylrest mit 1 bis 40 Kohlenstoffatomen und n eine ganze Zahl von 1 bis 60 steht, bedeuten,

d) 0 bis 40 Gew.-% eines oder mehrerer (Meth)acrylate der Formel (VI)

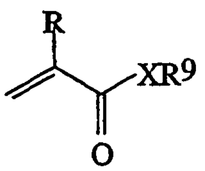

(VI),

worin R Wasserstoff oder Methyl, X Sauerstoff oder eine Aminogruppe der Formel -NH- oder $-NR^{10}-$, worin $R^{10}$ für einen Alkylrest mit 1 bis 40 Kohlenstoffatomen steht, und $R^9$ einen mit mindestens einer $-NR^{11}R^{12}$-Gruppe substituierten linearen oder verzweigten Alkylrest mit 2 bis 20, vorzugsweise 2 bis 6 Kohlenstoffatomen bedeuten, wobei $R^{11}$ und $R^{12}$ unabhängig von einander für Wasserstoff, einen Alkylrest mit 1 bis 20, vorzugsweise 1 bis 6 stehen oder worin $R^{11}$ und $R^{12}$ unter Einbeziehung des Stickstoffatoms und gegebenenfalls eines weiteren Stickstoff oder Sauerstoffatoms einen 5- oder 6-gliederigen Ring bilden, der gegebenenfalls mit $C_1$-$C_6$-Alkyl substituiert sein kann, und

e) 0 bis 40 Gew.-% eines oder mehrerer Comonomere, wobei sich die Angabe Gew.-% jeweils auf das Gesamtgewicht der ethylenisch ungesättigten Monomere bezieht.

**18.** Verfahren gemäß einem oder mehreren der vorhergehenden Ansprüche, **dadurch gekennzeichnet, daß** man als Comonomere Styrol, (Meth)acrylat-Derivate und/oder dispergierende Monomere einsetzt.

**19.** Verfahren gemäß einem oder mehreren der vorhergehenden Ansprüche, **dadurch gekennzeichnet, daß** man Polymere mit einem Gewichtsmittel des Molekulargewichts ≥ 7000 g/mol herstellt.

**20.** Verfahren gemäß einem oder mehreren der vorhergehenden Ansprüche,
**dadurch gekennzeichnet, daß** man ein Copolymer mit einem nichtstatistischen Aufbau, vorzugsweise ein Diblock-, Triblock- oder ein Gradientenpolymer erhält, indem man eine zweite und gegebenenfalls weitere Monomermischungen einem Polymer zudosiert, welches zuvor in einem Prozeß gemäß einem oder mehreren der vorhergehenden Ansprüche synthetisiert wurde.

**21.** Verfahren zur Herstellung von Polymeren, **dadurch gekennzeichnet, daß** man aus einer Polymerlösung, die gemäß einem oder mehreren der vorhergehenden Verfahren erhalten wurde, das Polymer isoliert.

## Claims

**1.** A process for producing polymer compositions which comprises polymerizing ethylenically unsaturated monomers by means of initiators comprising a transferable group of atoms and one or more catalysts comprising at least one transition metal, in the presence of ligands capable of forming a coordination compound with the metallic catalyst or catalysts, **characterized in that** the polymerizing is effected as a continuous operation.

**2.** A process according to claim 1, **characterized in that** the catalyst is a constituent of the reactor material or forms the entire reactor material.

**3.** A process according to either or both of the preceding claims, **characterized in that** copper is used as catalyst, the entire concentration of copper in the oxidation states (I) and (II) in the polymerization composition being ≤ 200 ppm, based on the total weight of the composition.

**4.** A process according to one or more of the preceding claims, **characterized in that** the entire concentration of copper in the oxidation states (I) and (II) in the composition is ≤ 150 ppm, preferably ≤ 100 ppm, based on the total weight of the composition.

**5.** A process according to one or more of the preceding claims, **characterized in that** metallic copper is used as source of the copper in the oxidation states (I) and (II) in the polymerization composition.

**6.** A process according to claim 5, **characterized in that** copper sheet, copper wire, copper foil, copper shaving, copper gauze, braided copper, woven copper and/or copper powder is used as copper source.

**7.** A process according to one or more of the preceding claims, **characterized in that** at least one chelating ligand containing nitrogen atoms is used.

**8.** A process according to one or more of the preceding claims, **characterized in that** an initiator comprising Cl, Br, I, SCN and/or $N_3$ is used.

**9.** A process according to one or more of the preceding claims, **characterized in that** the polymerizing is effected in solution.

**10.** A process according to one or more of the preceding claims, **characterized in that** a mineral oil and/or a synthetic oil are used as solvent.

**11.** A process according to claim 10, **characterized in that** the solvent is used in an amount in the range from 5 to 95 wt%, based on the total weight of the liquid composition.

**12.** A process according to claim 11, **characterized in that** the solvent is used in an amount in the range from 10 to 60 wt%, based on the total weight of the liquid composition.

**13.** A process comprising the steps of

a) ethylenically unsaturated monomers being polymerized by a process according to one or more of the preceding claims,
b) the metal-containing reaction product of a) being added to a monomer charge receiver and
c) being metered into a composition comprising ethylenically unsaturated monomers to thereby initiate a further

ATRP polymerization,

the polymerization in c) being carried out in a batch process or in a continuous process.

**14.** A process comprising the steps of

a) ethylenically unsaturated monomers being polymerized by means of initiators comprising a transferable group of atoms and one or more catalysts comprising at least one transition metal, in the presence of ligands capable of forming a coordination compound with the metallic catalyst or catalysts in a batch process,
b) the metal-containing reaction product of a) being added to a monomer charge receiver and
c) being metered into a composition comprising ethylenically unsaturated monomers to thereby initiate a further ATRP polymerization,

the polymerization in c) being carried out in a batch process or in a continuous process.

**15.** A process according to one or more of the preceding claims, **characterized in that** the ethylenically unsaturated monomers comprise 50 to 100 wt%, based on the total weight of the ethylenically unsaturated monomers, of one or more ethylenically unsaturated ester compounds of the formula (I)

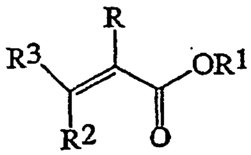

(I),

where R denotes hydrogen or methyl, $R^1$ denotes a linear or branched alkyl radical with 8 to 40 and preferably 10 to 40 carbon atoms, $R^2$ and $R^3$ independently denote hydrogen or a group of the formula -COOR', where R' denotes hydrogen or a linear or branched alkyl radical with 8 to 40 and preferably 10 to 40 carbon atoms.

**16.** A process according to one or more of the preceding claims, **characterized in that** a monomer composition comprising at least 50 wt% of one or more (meth)acrylates of the formula (II)

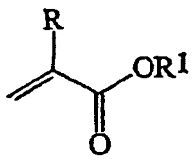

(II),

where R denotes hydrogen or methyl and $R^1$ denotes a linear or branched alkyl radical with 8 to 40 and preferably 10 to 40 carbon atoms, is polymerized.

**17.** A process according to one or more of the preceding claims, **characterized in that** a monomer composition comprising

a) 60 to 100 wt% of one or more ethylenically unsaturated ester compounds of the formula (I)

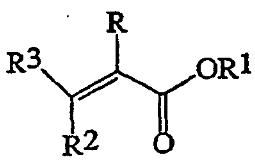

(I),

where R denotes hydrogen or methyl, $R^1$ denotes a linear or branched alkyl radical with 8 to 40 and preferably 10 to 40 carbon atoms, $R^2$ and $R^3$ independently denote hydrogen or a group of the formula -COOR', where R' denotes hydrogen or a linear or branched alkyl radical with 8 to 40 and preferably 10 to 40 carbon atoms,
b) 0 to 40 wt% of one or more (meth)acrylates of the formula (III)

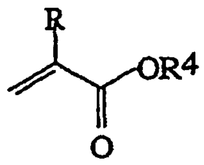

(III),

where R denotes hydrogen or methyl and $R^4$ denotes a linear or branched alkyl radical with 1 to 7 carbon atoms,
c) 0 to 40 wt% of one or more (meth)acrylates of the formula (IV)

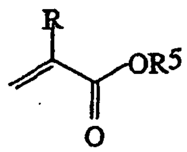

(IV),

where R denotes hydrogen or methyl and $R^5$ denotes an OH-substituted alkyl radical with 2 to 20 carbon atoms or an alkoxylated radical of the formula (V)

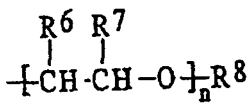

(V),

where $R^6$ and $R^7$ independently denote hydrogen or methyl, $R^8$ denotes hydrogen or an alkyl radical with 1 to 40 carbon atoms and n denotes an integer from 1 to 60,
d) 0 to 40 wt% of one or more (meth)acrylates of the formula (VI)

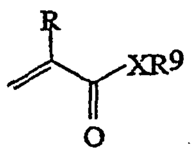

(VI),

where R denotes hydrogen or methyl, X denotes oxygen or an amino group of the formula -NH- or $-NR^{10}-$, where $R^{10}$ denotes an alkyl radical with 1 to 40 carbon atoms, and $R^9$ denotes a linear or branched alkyl radical with 2 to 20 and preferably 2 to 6 carbon atoms which is substituted by at least one $-NR^{11}R^{12}-$ group, where $R^{11}$ and $R^{12}$ independently denote hydrogen, an alkyl radical with 1 to 20 and preferably 1 to 6 carbon atoms or where $R^{11}$ and $R^{12}$ combine with the nitrogen atom and if appropriate a further nitrogen or oxygen atom to form a 5- or 6-membered ring which may if appropriate be substituted with $C_1$-$C_6$ alkyl, and
e) 0 to 40 wt% of one or more comonomers, the wt% values in each case referring to the total weight of the ethylenically unsaturated monomers, is polymerized.

**18.** A process according to one or more of the preceding claims, **characterized in that** styrene, (meth)acrylate derivatives and/or dispersing monomers are used as comonomers.

**19.** A process according to one or more of the preceding claims, **characterized in that** polymers having a weight average molecular weight ≥ 7000 g/mol are produced.

**20.** A process according to one or more of the preceding claims, **characterized in that** a copolymer having a non-random construction, preferably a two-block, three-block or gradient polymer, is obtained by metering a second and if appropriate further monomer mixtures into a polymer previously synthesized in an operation according to one or more of the preceding claims.

**21.** A process for producing a polymer, **characterized in that** the polymer is isolated from a polymer solution obtained according to one or more of the preceding processes.

**Revendications**

**1.** Procédé de préparation de compositions polymères, dans lequel des monomères éthyléniquement insaturés sont polymérisés au moyen d'amorceurs renfermant un groupe d'atomes transférable, et d'un ou de plusieurs catalyseurs comprenant au moins un métal de transition, en présence de ligands qui peuvent former un composé de coordination avec le ou les catalyseur(s) métallique(s), **caractérisé en ce que** la polymérisation est effectuée au moyen d'une opération continue.

**2.** Procédé selon la revendication 1, **caractérisé en ce que** le catalyseur est un constituant de la matière du réacteur ou constitue l'ensemble de la matière du réacteur.

**3.** Procédé selon l'une ou plusieurs des revendications précédentes, **caractérisé en ce que** l'on utilise du cuivre en tant que catalyseur, où la concentration totale en cuivre aux états d'oxydation (I) et (II) dans la composition de polymérisation est ≤ 200 ppm, par rapport au poids total de la composition.

**4.** Procédé selon l'une ou plusieurs des revendications précédentes, **caractérisé en ce que** la concentration totale en cuivre aux états d'oxydation (I) et (II) dans la composition est ≤ 150 ppm, de préférence ≤ 100 ppm, par rapport au poids total de la composition.

**5.** Procédé selon l'une ou plusieurs des revendications précédentes, **caractérisé en ce que** l'on utilise du cuivre métallique en tant que source pour le cuivre aux états d'oxydation (I) et (II) dans la composition de polymérisation.

**6.** Procédé selon la revendication 5, **caractérisé en ce que** l'on utilise, en tant que source de cuivre, de la tôle de cuivre, du fil de cuivre, de la feuille de cuivre, des copeaux de cuivre, de la maille de cuivre, du cuivre tressé, du cuivre tissé et/ou de la poudre de cuivre.

**7.** Procédé selon l'une ou plusieurs des revendications précédentes, **caractérisé en ce que** l'on utilise au moins un ligand chélateur renfermant des atomes d'azote.

**8.** Procédé selon l'une ou plusieurs des revendications précédentes, **caractérisé en ce que** l'on utilise un amorceur renfermant du Cl, du Br, du I, du SCN et/ou du $N_3$.

**9.** Procédé selon l'une ou plusieurs des revendications précédentes, **caractérisé en ce que** la polymérisation est effectuée en solution.

**10.** Procédé selon l'une ou plusieurs des revendications précédentes, **caractérisé en ce que** l'on utilise une huile minérale et/ou une huile synthétique en tant que solvant.

**11.** Procédé selon la revendication 10, **caractérisé en ce que** le solvant est utilisé en une quantité dans la plage de 5 à 95 % en poids, par rapport au poids total de la composition liquide.

**12.** Procédé selon la revendication 11, **caractérisé en ce que** le solvant est utilisé en une quantité dans la plage de 10 à 60 % en poids, par rapport au poids total de la composition liquide.

**13.** Procédé comprenant les étapes de

a) polymérisation de monomères éthyléniquement insaturés par un procédé selon l'une ou plusieurs des revendications précédentes,
b) addition du produit de réaction contenant du métal de a) à une charge de monomères, et
c) addition en une quantité mesurée à une composition comprenant des monomères éthyléniquement insaturés et ainsi amorçage d'une polymérisation ATRP supplémentaire,

où la polymérisation en c) est effectuée dans un procédé discontinu ou continu.

**14.** Procédé comprenant les étapes de

a) polymérisation de monomères éthyléniquement insaturés au moyen d'amorceurs renfermant un groupe d'atomes transférable, et d'un ou de plusieurs catalyseurs renfermant au moins un métal de transition, en présence de ligands qui peuvent former un composé de coordination avec le ou les catalyseur(s) métallique(s), dans un procédé discontinu,
b) addition du produit de réaction contenant du métal de a) à une charge de monomères, et
c) addition en une quantité mesurée à une composition comprenant des monomères éthyléniquement insaturés et ainsi amorçage d'une polymérisation ATRP supplémentaire,

où la polymérisation en c) est effectuée dans un procédé discontinu ou continu.

**15.** Procédé selon l'une ou plusieurs des revendications précédentes, **caractérisé en ce que** les monomères éthyléniquement insaturés comprennent de 50 à 100 % en poids, par rapport au poids total des monomères éthyléniquement insaturés, d'un ou de plusieurs composés ester éthyléniquement insaturés de formule (I)

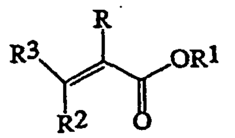

(I),

dans laquelle R représente un hydrogène ou un méthyle, $R^1$ représente un radical alkyle linéaire ou ramifié renfermant de 8 à 40, de préférence de 10 à 40 atomes de carbone, $R^2$ et $R^3$ représentent indépendamment un hydrogène ou un groupe de formule -COOR', dans laquelle R' représente un hydrogène ou un radical alkyle linéaire ou ramifié renfermant de 8 à 40, de préférence de 10 à 40, atomes de carbone.

**16.** Procédé selon l'une ou plusieurs des revendications précédentes, **caractérisé en ce que** l'on procède à la polymérisation d'une composition de monomères comprenant au moins 50 % en poids d'un ou de plusieurs (méth)acrylates de formule (II)

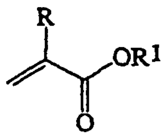

(II),

dans laquelle R représente un hydrogène ou un méthyle, et $R^1$ représente un radical alkyle linéaire ou ramifié renfermant de 8 à 40, de préférence de 10 à 40, atomes de carbone.

**17.** Procédé selon l'une ou plusieurs des revendications précédentes, **caractérisé en ce que** l'on procède à la polymérisation d'une composition de monomères comprenant

a) de 60 à 100 % en poids d'un ou de plusieurs composés ester éthyléniquement insaturés de formule (I)

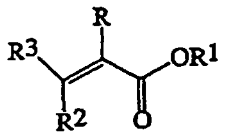 (I),

dans laquelle R représente un hydrogène ou un méthyle, $R^1$ représente un radical alkyle linéaire ou ramifié renfermant de 8 à 40, de préférence de 10 à 40 atomes de carbone, $R^2$ et $R^3$ représentent indépendamment un hydrogène ou un groupe de formule -COOR', dans laquelle R' représente un hydrogène ou un radical alkyle linéaire ou ramifié renfermant de 8 à 40, de préférence de 10 à 40, atomes de carbone,
b) de 0 à 40 % en poids d'un ou de plusieurs (méth)acrylates de formule (III)

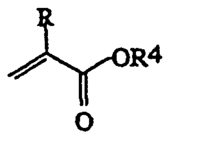 (III),

dans laquelle R représente un hydrogène ou un méthyle, et $R^4$ représente un radical alkyle linéaire ou ramifié renfermant de 1 à 7 atomes de carbone,
c) de 0 à 40 % en poids d'un ou de plusieurs (méth)acrylates de formule (IV)

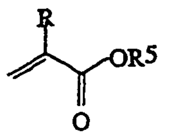 (IV),

dans laquelle R représente un hydrogène ou un méthyle, et $R^5$ représente un radical alkyle substitué par un groupe OH, renfermant de 2 à 20 atomes de carbone, ou un radical alcoxylé de formule (V)

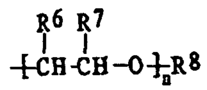 (V),

dans laquelle $R^6$ et $R^7$ représentent indépendamment un hydrogène ou un méthyle, $R^8$ représente un hydrogène ou un radical alkyle renfermant de 1 à 40 atomes de carbone, et n représente un entier de 1 à 60,
d) de 0 à 40 % en poids d'un ou de plusieurs (méth)acrylates de formule (VI)

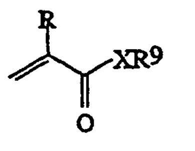 (VI),

dans laquelle R représente un hydrogène ou un méthyle, X représente un oxygène ou un groupe amino de formule -NH- ou $-NR^{10}-$, dans laquelle $R^{10}$ représente un radical alkyle renfermant de 1 à 40 atomes de carbone, et $R^9$ représente un radical alkyle linéaire ou ramifié, substitué par au moins un groupe $-NR^{11}R^{12}$, ou un radical alkyle ramifié renfermant de 2 à 20, de préférence de 2 à 6 atomes de carbone, où $R^{11}$ et $R^{12}$ représentent, indépendamment l'un de l'autre, un hydrogène, un radical alkyle renfermant de 1 à 20, de préférence de 1 à 6 atomes de carbone, ou où $R^{11}$ et $R^{12}$ forment, à l'inclusion de l'atome d'azote et éventuellement d'un azote supplémentaire ou d'un atome d'oxygène, un noyau à 5 ou 6 chaînons, qui peut être éventuellement substitué par un alkyle en $C_1$-$C_6$, et

e) de 0 à 40 % en poids d'un ou de plusieurs comonomères, où les donnés pondérales se rapportent dans chaque cas au poids total des monomères éthyléniquement insaturés.

**18.** Procédé selon l'une ou plusieurs des revendications précédentes, **caractérisé en ce que** l'on utilise le styrène, des dérivés de (méth)acrylate et/ou des monomères dispersants en tant que comonomères.

**19.** Procédé selon l'une ou plusieurs des revendications précédentes, **caractérisé en ce que** des polymères présentant un poids moléculaire moyen en poids ≥ 7000 g/mol sont préparés.

**20.** Procédé selon l'une ou plusieurs des revendications précédentes, **caractérisés en ce qu'**un copolymère présentant une structure non statistique, de préférence un polymère di-bloque, tri-bloque ou à gradient est obtenu en ajoutant en quantité mesurée un deuxième mélange de monomères et éventuellement des mélanges de monomères supplémentaires à un polymère qui a été préalablement synthétisé dans un procédé selon l'une ou plusieurs des revendications précédentes.

**21.** Procédé de préparation de polymères, **caractérisé en ce que** le polymère est isolé d'une solution de polymères qui a été obtenue selon l'un ou plusieurs des procédés précédents.